(19)

Europäisches
Patentamt
European
Patent Office
Office européen
des brevets

(11) **EP 4 480 624 A1**

(12) **EUROPEAN PATENT APPLICATION**
published in accordance with Art. 153(4) EPC

(43) Date of publication:
**25.12.2024 Bulletin 2024/52**

(21) Application number: **22927313.1**

(22) Date of filing: **30.11.2022**

(51) International Patent Classification (IPC):
**B23K 11/36** (2006.01)      **B23K 9/02** (2006.01)
**B23K 9/04** (2006.01)      **B23K 11/00** (2006.01)
**B23K 11/11** (2006.01)      **B23K 28/02** (2014.01)

(52) Cooperative Patent Classification (CPC):
**B23K 9/02; B23K 9/04; B23K 11/00; B23K 11/11;
B23K 11/36; B23K 28/02**

(86) International application number:
**PCT/JP2022/044178**

(87) International publication number:
**WO 2023/157424 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.02.2022 JP 2022023284**

(71) Applicant: **NIPPON STEEL CORPORATION**
**Chiyoda-ku**
**Tokyo 100-8071 (JP)**

(72) Inventors:
• **FUJIMOTO, Hiroki**
  **Tokyo 100-8071 (JP)**
• **TAMEZANE, Takumi**
  **Tokyo 100-8071 (JP)**
• **ASHIDA, Hajime**
  **Tokyo 100-8071 (JP)**

(74) Representative: **Zimmermann & Partner**
**Patentanwälte mbB**
**Postfach 330 920**
**80069 München (DE)**

(54) **LAP WELDED JOINT, AUTOMOBILE SKELETON MEMBER, AND METHOD FOR MANUFACTURING LAP WELDED JOINT**

(57)     A lap welded joint includes a plurality of steel sheets that are partially or entirely overlapped, a spot-welded portion that joins overlapping portions of two or more of the steel sheets, and an arc-welded portion that is disposed to temper a nugget of the spot-welded portion. One or more of the spot-welded steel sheets are high strength steel sheets having a tensile strength of 780 MPa or more. A portion in which a hardness measurement value of the nugget of the spot-welded portion is minimized is present between a center of the nugget and the arc-welded portion. A difference between a minimum value of the hardness measurement value of the nugget and a maximum value of the hardness measurement value of the nugget is equal to or greater than 25 HV.

**EP 4 480 624 A1**

# FIG. 2A

# FIG. 2B

**Description**

Technical Field of the Invention

The present invention relates to a lap welded joint, an automotive frame member, and a lap welded joint manufacturing method.

This application claims priority based on Japanese Patent Application No. 2022-023284 filed on February 17, 2022, the content of which is incorporated herein by reference.

Related Art

High strength steel sheets are being applied to components for automotives in order to reduce the weight of the automotive and to improve collision safety of the automotive. However, a spot welded joint including a high strength steel sheet has a problem in that joint strength is likely to be reduced. Specifically, when the tensile strength of a base steel sheet is equal to or greater than 780 MPa, the joint strength is reduced.

Various techniques for improving the joint strength of a welded joint including a high strength steel sheet have been provided so far.

Patent Document 1 discloses a laser-welded structural member manufacturing method for manufacturing a laser-welded structural member. The method includes: overlapping one steel sheet having a bent portion and a flange following the bent portion and another steel sheet or a plurality of steel sheets at the flange; performing first laser welding on the overlapping portion to form a first laser-welded portion; after a temperature of the first laser-welded portion is reduced to be lower than an Mf point, performing second laser welding on a region, which is located on a side opposite to the bent portion with respect to the formed first laser-welded portion in the vicinity of the first laser-welded portion, to form a second laser-welded portion; and performing a tempering process on a heat-affected zone of the first laser-welded portion using the second laser welding such that a hardness of the heat-affected zone is equal to or less than 90% of a hardness of the heat-affected zone of the second laser-welded portion.

Patent Document 2 discloses a method for manufacturing a welded joint. The method includes: preparing a welded joint including a first steel sheet, a second steel sheet that is overlapped with the first steel sheet, and a hardened nugget that joins the first steel sheet and the second steel sheet; bringing a first electrode into contact with the first steel sheet in a portion A which is a portion outside the nugget in a sheet surface direction in a plane parallel to the first steel sheet of the welded joint; bringing a second electrode into contact with the second steel sheet in a portion B which is a portion outside the nugget in the sheet surface direction and which is located on a side opposite to the portion A, with the nugget interposed therebetween, in the plane parallel to the first steel sheet of the welded joint; and passing a current through the welded joint between the first electrode and the second electrode.

Patent Document 3 discloses an overlapping portion welding method that joins a plurality of steel sheet members in an overlapping portion, at least one of the plurality of steel sheet members including a martensite structure. The overlapping portion welding method includes: a spot welding step of forming a spot-welded portion having a nugget in the overlapping portion; a melted and solidified portion forming step of, when a laser beam is emitted to form a melted and solidified portion that crosses an end of the nugget between the nugget and a position that is 3 mm or more outward from the end of the nugget, forming the melted and solidified portion in the steel sheet members including the martensite structure at a position that is 1 mm outward from the end of the nugget such that the depth of the melted and solidified portion is equal to or greater than 50% of the sheet thickness of each steel sheet member.

Patent Document 4 discloses a method for manufacturing a spot welded joint using a plurality of steel sheets including a steel sheet having a tensile strength of 440 MPa or more. The method includes: a first step of interposing the plurality of steel sheets overlapped with each other between a pair of first electrodes and energizing the plurality of steel sheets with a predetermined energization current I1 and for an energization time t1 to form a nugget; a second step of opening the pair of first electrodes and cooling the nugget to a temperature equal to or lower than an Mf point; and a third step of interposing portions, which correspond to the nugget, in the plurality of steel sheets between a pair of second electrodes and energizing the portions with a predetermined energization current I3 and for an energization time t3 to temper the nugget. Energization conditions in the first step and the third step satisfy $I_3^2 \times t_3 < I_1^2 \times t_1$.

Patent Document 5 discloses a welding method including: overlapping heat-treated steel sheets and spot-welding the heat-treated steel sheets to form a welded portion having a nugget portion; and passing a high-frequency current through the welded portion to temper the welded portion such that a hardness of the nugget portion is equal to or less than that of the heat-treated steel sheets.

Patent Document 6 discloses a high strength thin steel sheet spot welding method in which, when two or more high strength thin steel sheets overlapped with each other are interposed between a pair of electrodes and are spot-welded while welding pressure is applied, after a first point is welded, the positions of the electrodes are moved, and, after a first welded portion is cooled down to a temperature equal to or lower than an Mf point, a second point is welded so as to partially overlap the first welded portion.

Patent Document 7 discloses a method for welding a metal sheet in which, when an end portion of the metal sheet overlapped with a substrate is spot-welded at substantially equal intervals along an edge of the end portion to be temporarily fixed to the substrate and then the edge of the metal sheet is fillet-welded, the spot welding is performed such that a diameter of a nugget is equal to or greater than 2 mm, a center of the nugget is 5 to 20 mm away from the edge, and an interval is equal to or less than 20 mm.

Prior Art Document

Patent Document

Patent Document 1: Japanese Unexamined Patent Application, First Publication No. 2010-12504

Patent Document 2: Japanese Patent Publication No. 6769584

Patent Document 3: PCT International Publication No. WO2014/024997

Patent Document 4: Japanese Unexamined Patent Application, First Publication No. 2020-69525

Patent Document 5: Japanese Unexamined Patent Application, First Publication No. 2016-55337

Patent Document 6: Japanese Unexamined Patent Application, First Publication No. 2010-172945

Patent Document 7: Japanese Unexamined Patent Application, First Publication No. 2005-152989

Disclosure of the Invention

Problems to be Solved by the Invention

However, in recent years, there has been an increasing demand for the joint strength of a welded joint. There is a strong desire for further improvement in the joint strength of a welded joint by techniques different from those of Patent Documents 1 to 7.

An object of the present invention is to provide a lap welded joint that is composed of a plurality of steel sheets including a high strength steel sheet and that has a high joint strength, an automotive frame member, and a lap welded joint manufacturing method.

Means for Solving the Problem

The gist of the present invention is as follows.

(1) According to an aspect of the present invention, there is provided a lap welded joint including: a plurality of steel sheets that are partially or entirely overlapped; a spot-welded portion that joins two or more of the steel sheets; and an arc welding bead that is formed in one or more of the steel sheets. The spot-welded portion is disposed in an overlapping portion, which is a portion in which the plurality of steel sheets are overlapped, in the lap welded joint, and the arc welding bead is formed in one or more of the steel sheets in which the spot-welded portion is formed. One or more of the steel sheets joined by the spot-welded portion are high strength steel sheets having a tensile strength of 780 MPa or more. In a cross section that includes a straight line connecting a center of an indentation of the spot-welded portion and a point closest to the center of the indentation on an edge of the arc welding bead in a plan view of the lap welded joint from a thickness direction and that is perpendicular to the overlapping portion of the steel sheets, when Vickers hardness at a position that is at a depth of 1/4 of a sheet thickness of the high strength steel sheet from a spot welding surface of the high strength steel sheet is continuously measured along the spot welding surface, a portion in which a hardness measurement value of a nugget of the spot-welded portion is minimized is present between a center of the nugget and the arc welding bead, and a difference between a minimum value of the hardness measurement value of the nugget and a maximum value of the hardness measurement value of the nugget is equal to or greater than 25 HV.

(2) In the lap welded joint according to (1), in the cross section, the difference between the minimum value of the hardness measurement value of the nugget and the maximum value of the hardness measurement value of the nugget may be equal to or greater than 40 HV.

(3) In the lap welded joint according to (1) or (2), two or more of the steel sheets may be joined by both the spot-welded portion and the arc welding bead.

(4) In the lap welded joint according to any one of (1) to (3), in the plan view of the lap welded joint from the thickness direction, a shortest distance between the center of the indentation of the spot-welded portion and the edge of the arc welding bead may be equal to or less than 17 mm.

(5) In the lap welded joint according to any one of (1) to (4), in the plan view of the lap welded joint from the thickness direction, an interval between an edge of the indentation of the spot-welded portion and the edge of the arc welding bead may be greater than 0 mm.

(6) In the lap welded joint according to any one of (1) to (5), a width of the arc welding bead may be equal to or greater than 3 mm.

(7) In the lap welded joint according to any one of (1) to (6), a number of the steel sheets may be three or more, one or more of the steel sheets may be disposed outside the spot-welded portion, and the steel sheet disposed outside the spot-welded portion and the steel sheet joined by the spot-welded portion may be joined by the arc welding bead.

(8) In the lap welded joint according to any one of (1) to (7), a tensile strength of the high strength steel sheet may be equal to or greater than 1700 MPa.

(9) According to another aspect of the present invention, there is provided an automotive frame member including the lap welded joint according to any one of (1) to (8).

(10) According to still another aspect of the present invention, there is provided a lap welded joint manufacturing method for manufacturing the lap welded joint according to any one of (1) to (8). The lap welded joint manufacturing method includes: partially or entirely overlapping a plurality of steel sheets; spot-welding overlapping portions of the steel sheets to form a spot-welded portion; and arc-welding one or more of the steel sheets to form an arc welding bead. One or more of the steel sheets to be spot-welded are high strength steel sheets having a tensile strength of 780 MPa or more, and a nugget of the spot-welded portion is tempered by welding heat of the arc welding.

(11) In the lap welded joint manufacturing method according to (10), in a plan view of the lap welded joint from a thickness direction, an interval between an edge of an indentation of the spot-welded portion and an edge of the arc welding bead may be greater than 0 mm.

(12) In the lap welded joint manufacturing method according to (10) or (11), an amount of heat input of the arc welding may be equal to or greater than 1000 J/cm, and, in a plan view of the lap welded joint from a thickness direction, a shortest distance between a center of an indentation of the spot-welded portion and an edge of the arc welding bead may be equal to or less than 17 mm.

(13) The lap welded joint manufacturing method according to any one of (10) to (12) may further include: adding one or more steel sheets to two or more of the spot-welded steel sheets before the arc welding. The two or more spot-welded steel sheets and the added steel sheet may be joined by the arc welding.

(14) In the lap welded joint manufacturing method according to any one of (10) to (13), a tensile strength of the high strength steel sheet may be equal to or greater than 1700 MPa.

Effects of the Invention

According to the present invention, it is possible to provide a lap welded joint that is composed of a plurality of steel sheets including a high strength steel sheet and has a high joint strength, an automotive frame member, and a lap welded joint manufacturing method.

Brief Description of the Drawings

FIG. 1A is a plan view showing an overlapping portion of a lap welded joint according to an embodiment of the present invention in a plan view of the lap welded joint from a thickness direction.

FIG. 1B is a cross-sectional view showing the overlapping portion of the lap welded joint taken along a line IB-IB of FIG. 1A.

FIG. 2A is a plan view showing an overlapping portion of a lap welded joint according to another embodiment of the present invention in a plan view of the lap welded joint from the thickness direction.

FIG. 2B is a cross-sectional view showing the overlapping portion of the lap welded joint taken along a line IIB-IIB of FIG. 2A.

FIG. 3 is a cross-sectional view showing an arc-welded portion obtained by fillet-welding a bent portion of a steel sheet.

FIG. 4 is a cross-sectional view showing an arc-welded portion obtained by welding end surfaces of steel sheets.

FIG. 5A is a plan view showing an arc-welded portion obtained by performing lap fillet welding on an inner end surface of a hole provided in a steel sheet.

FIG. 5B is a cross-sectional view showing the arc-welded portion taken along a line VB-VB of FIG. 5A.

FIG. 6 is a cross-sectional view showing a lap welded joint to which a joggle structure is applied.

FIG. 7 is a cross-sectional view showing a lap welded joint to which another joggle structure is applied.

FIG. 8A is a plan view showing an arc-spot-welded portion.

FIG. 8B is a cross-sectional view showing the arc-spot-welded portion taken along a line VIIIB-VIIIB of FIG. 8A.

FIG. 9 is a plan view showing a lap welded joint having a plurality of arc-welded portions.

FIG. 10 is a plan view showing a lap welded joint in which edges of steel sheets have irregularities and an arc-welded portion is disposed in a protruding portion.

FIG. 11 is a plan view showing a lap welded joint in which edges of steel sheets have irregularities and an arc-welded portion is disposed in a recessed portion.

FIG. 12 is a cross-sectional view showing a lap welded joint in which the number of steel sheets is three and an arc-welded portion is a lap fillet welded portion of two steel sheets.

FIG. 13 is a cross-sectional view showing a lap welded joint in which the number of steel sheets is three and an arc-welded portion is a lap fillet welded portion of the three steel sheets.

FIG. 14 is a cross-sectional view showing a lap welded joint in which the number of steel sheets is three and two lap fillet arc-welded portions of two steel sheets are provided.

FIG. 15 is a cross-sectional view showing a lap welded joint in which the number of steel sheets is three, some of the steel sheets have a hole for fillet welding, and two lap fillet arc-welded portions of two steel sheets are provided.

FIG. 16A is a plan view showing a lap welded joint in which overlapping portions of three steel sheets are joined by one spot-welded portion and holes are used for arc-welding the three steel sheets.

FIG. 16B is a cross-sectional view showing the arc-welded portion taken along a line XVIB-XVIB of FIG. 16A.

FIG. 17A is a plan view showing a lap welded joint in which overlapping portions of three steel sheets are joined by one spot-welded portion and holes are used for arc-welding the three steel sheets.

FIG. 17B is a cross-sectional view showing the arc-welded portion taken along a line XVIIB-XVIIB of FIG. 17A.

FIG. 17C is a cross-sectional view showing the arc-welded portion taken along a line XVIIC-XVIIC of FIG. 17A.

FIG. 18 is a cross-sectional view showing a lap welded joint in which spot welding has been performed on only two of three steel sheets and lap fillet welding has been performed on the remaining steel sheet.

FIG. 19 is a cross-sectional view showing a lap welded joint in which spot welding has been performed on only two of three steel sheets and T fillet welding has been performed on the remaining steel sheet.

FIG. 20 is a cross-sectional view showing a lap welded joint in which spot welding has been performed on only two of three steel sheets and lap fillet welding has been performed on an inner end surface of a hole provided in the remaining steel sheet.

FIG. 21 is a cross-sectional view showing a lap welded joint in which spot welding has been performed on only two of three steel sheets and arc spot welding has been performed on a hole provided in the remaining steel sheet.

FIG. 22 is a cross-sectional view showing a lap welded joint in which spot welding has been performed on only two of three steel sheets and T fillet welding has been performed on the remaining steel sheet.

FIG. 23A is a perspective view showing a bumper reinforcement which is an example of an automotive frame member.

FIG. 23B is a cross-sectional view showing the bumper reinforcement taken along a line XXIIIB-XXIIIB of FIG. 23A.

FIG. 23C is a cross-sectional view showing the bumper reinforcement taken along a line XXIIIC-XXIIIC of FIG. 23A.

FIG. 24A is a plan view showing a floor member which is an example of the automotive frame member.

FIG. 24B is a cross-sectional view showing the floor member taken along a line XXIVB-XXIVB of FIG. 24A.

FIG. 25A is a perspective view showing a front side member which is an example of the automotive frame member.

FIG. 25B is an enlarged view showing a left side of a region, which is surrounded by a broken line, in the front side member shown in FIG. 25A.

FIG. 25C is an enlarged view showing a right side of the region, which is surrounded by the broken line, in the front side member shown in FIG. 25A.

FIG. 26A is a perspective view showing a connection portion between a B-pillar reinforcement and a side sill reinforcement which are examples of the automotive frame member.

FIG. 26B is an enlarged view showing a region, which is indicated by an arrow, in the connection portion shown in FIG. 26A.

FIG. 27 is a perspective view showing a connection portion between a front side member and a side sill of an electric automotive.

FIG. 28A is a flowchart showing a method for manufacturing a lap welded joint according to an aspect of the present invention.

FIG. 28B is a flowchart showing a method for manufacturing a lap welded joint according to another aspect of the present invention.

FIG. 29A is a cross-sectional view showing an invention example in which arc welding is performed on an upper sheet among invention examples shown in Table 1.

FIG. 29B is a cross-sectional view showing an invention example in which arc welding is performed on an overlapping surface among the invention examples shown in Table 1.

FIG. 30 shows an external appearance photograph of some of invention examples shown in Table 2.

FIG. 31 shows photographs of shear surfaces after a chisel test on the invention examples shown in Table 2.

FIG. 32 shows hardness measurement results of some of the invention examples and comparative examples shown in Table 2.

FIG. 33 shows hardness measurement results of some of invention examples and comparative examples shown in Table 3.

FIG. 34 is a schematic view showing a member bending test.

FIG. 35 shows displacement-load curves obtained by the member bending test.

FIG. 36A shows an external appearance photograph of the comparative example after the bending test.

FIG. 36B shows an external appearance photograph of the invention example after the bending test.

Embodiments of the Invention

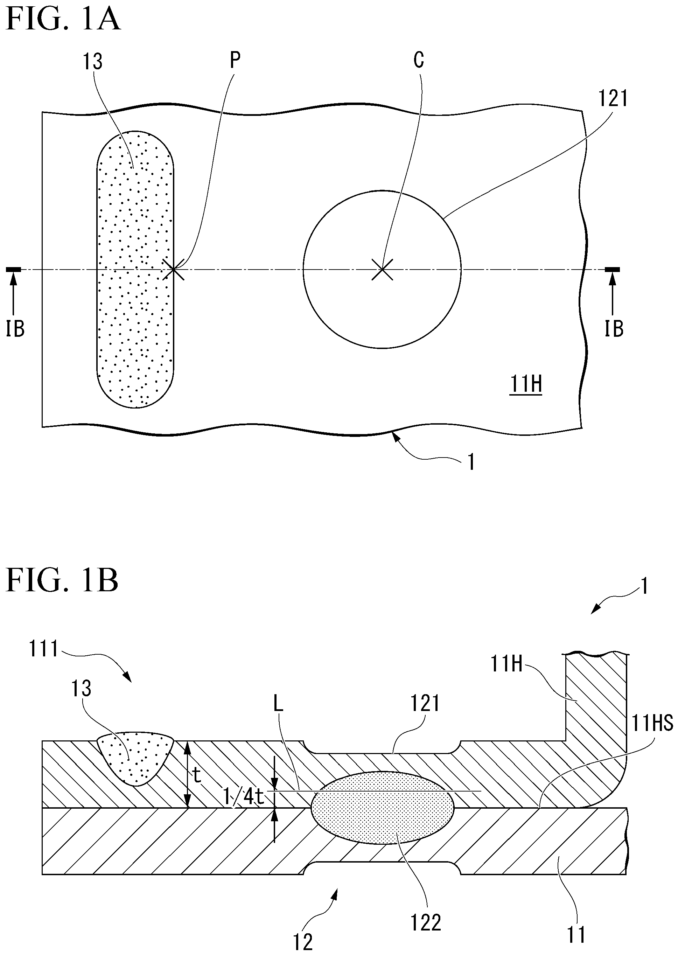

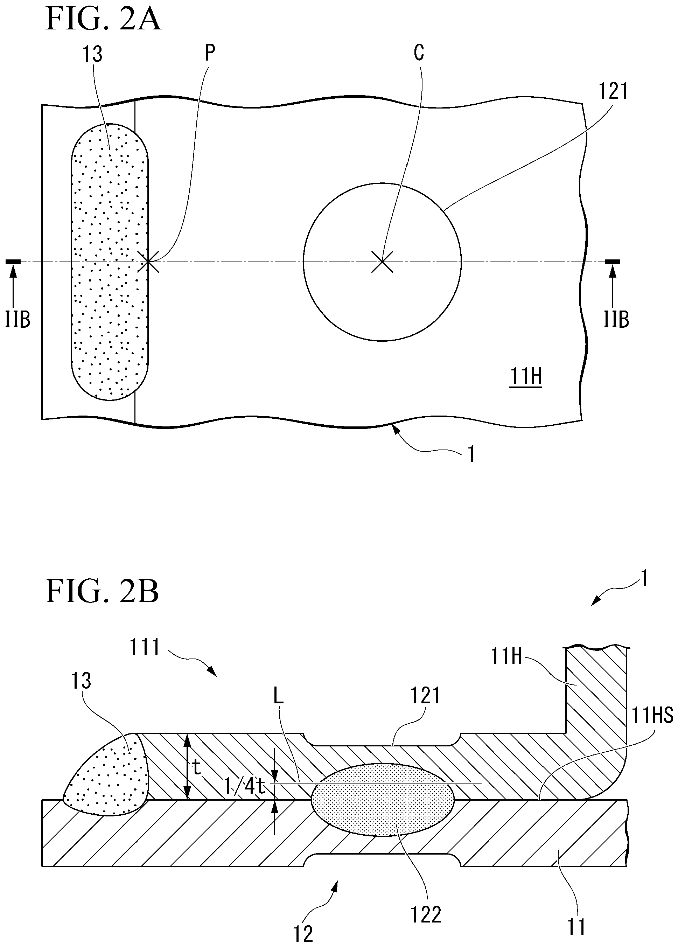

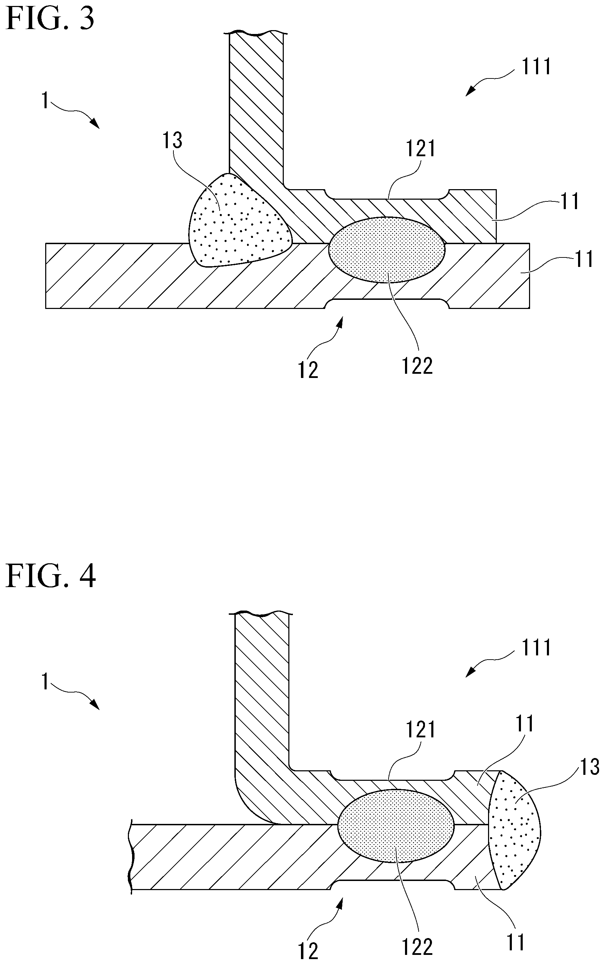

A lap welded joint 1 according to a first embodiment of the present invention includes a plurality of steel sheets 11 that are partially or entirely overlapped with each other, a spot-welded portion 12 that joins two or more steel sheets 11, and an arc-welded portion 13 that is formed in one or more of the steel sheets as shown in a plan view of FIG. 1A and a cross-sectional view of FIG. 1B. Here, an overlapping portion 111 is a portion in which two or more steel sheets 11 are overlapped with each other in the lap welded joint 1. That is, the overlapping portion 111 has a laminated structure including two or more steel sheets 11, and a direction in which a surface of the overlapping portion 111 extends is substantially parallel to a direction in which the steel sheet 11 extends in the portion in which the steel sheets 11 are overlapped with each other and is substantially perpendicular to a thickness direction of the steel sheet 11 in the portion in which the steel sheets 11 are overlapped with each other. For example, as shown in FIG. 3 or FIG. 4, two or more steel sheets 11 do not need to be overlapped with each other in portions other than the overlapping portion 111. In the overlapping portion 111, two or more steel sheets 11 that are overlapped with each other are joined by spot welding, and the spot-welded portion 12 is formed. The arc-welded portion 13 is formed in at least one or more of steel sheets 11 among the steel sheets 11 in which the spot-welded portion 12 is formed. One or more of the spot-welded steel sheets 11 are high strength steel sheets 11H having a tensile strength of 780 MPa or more. In addition, in a cross section that includes a straight line (for example, a line IB-IB in FIG. 1A and a line IIB-IIB in FIG. 2A) connecting a center C of an indentation 121 of the spot-welded portion 12 and a point P closest to the center C of the indentation 121 on an edge of the arc-welded portion 13 in a plan view of the lap welded joint 1 from the thickness direction and that is perpendicular to the overlapping portion 111 of the steel sheets 11, when Vickers hardness at a position L that is at a depth of 1/4 of a sheet thickness t of a high strength steel sheet 11H from a spot welding surface 11HS of the high strength steel sheet 11H is continuously measured along the spot welding surface 11HS, a portion in which a hardness measurement value of a nugget 122 of the spot-welded portion 12 is minimized is present between the center of the nugget 122 and the arc-welded portion 13. Furthermore, a difference between the minimum value of the hardness measurement value of the nugget 122 and the maximum value of the hardness measurement value of the nugget 122 is equal to or greater than 25 HV. Hereinafter, the lap welded joint 1 according to this embodiment will be described in detail.

The lap welded joint 1 according to this embodiment has a plurality of steel sheets 11. Two or more of the plurality of steel sheets 11 are partially or entirely overlapped with each other, and the overlapping portions 111 of the lap welded joint 1 are joined by the spot-welded portion 12. The overlapping portion 111 is a portion in which the steel sheets 11 are overlapped with each other. In the configuration shown in FIG. 1B, an upper sheet is a press-formed member having a flange portion, and the flange portion, which is a portion of the upper sheet, is overlapped with a lower sheet. The overlapping portions 111 are joined by the spot-welded portion 12. Meanwhile, both the upper sheet and the lower sheet may have a flat sheet shape and may be entirely lap-welded.

One or more of the steel sheets 11 joined by the spot-welded portion 12 are the high strength steel sheets 11H having a tensile strength of 780 MPa or more. This makes it possible to improve the strength of a mechanical component to which the lap welded joint 1 according to this embodiment is applied. In addition, the high strength steel sheet 11H has a problem in that the joint strength of a spot welded joint is reduced. However, in the lap welded joint 1 according to this embodiment, this problem is addressed by the tempering of the nugget 122 using the heat input when the arc-welded portion 13, which will be described below, is formed.

Further, in the lap welded joint 1 according to this embodiment, the spot-welded portion 12 means the nugget 122 and a peripheral portion thereof. Specifically, the spot-welded portion 12 is a concept including the nugget 122, which is weld metal, and the indentations 121 formed above and below the nugget 122. Strictly speaking, the steel sheets 11 are joined by the nugget 122 of the spot-welded portion 12.

The configuration of the spot-welded portion 12 is not particularly limited and can be appropriately changed depending on the type of the steel sheet 11. In general, the diameter of a nugget of a joint portion of an automotive frame member is in a range of $3\sqrt{t}$ to $7\sqrt{t}$. "t" is the sheet thickness of the thinner of two steel sheets 11 disposed on the surfaces of the overlapping portions 111 joined by the spot-welded portion 12. The diameter of the nugget may be applied to the spot-welded portion 12 of the lap welded joint 1 according to this embodiment. From the viewpoint of ensuring joint strength and preventing hydrogen embrittlement, the diameter of the nugget is more preferably in a range of $4^{\wedge}t$ to $7^{\wedge}t$.

The tensile strength of the high strength steel sheet 11H is preferably equal to or greater than 980 MPa, equal to or greater than 1300 MPa, equal to or greater than 1500 MPa, equal to or greater than 1700 MPa, or equal to or greater than 1900 MPa. An upper limit of the tensile strength of the high strength steel sheet 11H is not particularly specified. For example, the tensile strength of the high strength steel sheet 11H may be equal to or less than 2700 MPa, equal to or less than 2600 MPa, or equal to or less than 2500 MPa. In the lap welded joint 1 shown in FIGS. 1A and 1B, the high strength steel sheet 11H and the low strength steel sheet 11 having a tensile strength of less than 780 MPa are joined by the spot-welded portion 12. Meanwhile, two or more high strength steel sheets 11H may be joined by the spot-welded portions 12.

The type of the high strength steel sheet 11H is not particularly limited. Examples of the high strength steel sheet 11H include a DP steel sheet, a TRIP steel sheet, a steel sheet with a composite structure, a martensitic steel sheet, and a hot stamping steel sheet. In addition, the high strength steel sheet 11H may be a cold-rolled steel sheet or a hot-rolled steel sheet.

The high strength steel sheet 11H having a tensile strength of 780 MPa or more and the low strength steel sheet having a tensile strength of less than 780 MPa included in the lap welded joint 1 according to this embodiment may be plated steel sheets or non-plated steel sheets. Examples of the plated steel sheet include a GI-plated steel sheet, a GA-plated steel sheet, an EG-plated steel sheet, a Zn-Ni-plated steel sheet, a Zn-Al-plated steel sheet, a Zn-Mg-plated steel sheet, and a Zn-Mg-Al-plated steel sheet. In a case where a galvanized hot stamping steel sheet is included in the lap welded joint 1, a surface layer of a Fe-Zn or Fe-Zn-Ni solid solution phase may include a zinc oxide. In a case where an aluminum-based hot stamping steel sheet is included in the lap welded joint 1, a plurality of Al-Fe-Si-based intermetallic compound layers may be formed. Further, a ZnO or black coating may be formed on the intermetallic compound layer. In a case where a non-plated hot stamping steel sheet is included in the lap welded joint 1, a steel sheet obtained by performing shot blasting on the non-plated hot stamping steel sheet may be used to remove scales generated in a hot stamping step.

The sheet thickness of the high strength steel sheet 11H is not particularly limited. In general, the sheet thickness of a steel sheet used for a component for an automotive or an automotive body is 0.6 to 3.2 mm. This sheet thickness may be applied to the high strength steel sheet 11H of the lap welded joint 1 according to this embodiment. In addition, the number of overlapping steel sheets 11 included in the overlapping portions 111 joined by the spot-welded portion 12 is preferably in a range of, for example, two to four. The steel sheet 11 that is spot-welded to the high strength steel sheet 11H may be the high strength steel sheet 11H or a low strength steel sheet.

The spot-welded portion obtained by spot-welding the high strength steel sheet has a problem in that the joint strength is low. It is considered that this is because the nugget of the spot-welded portion is embrittled by a large amount of C included in the high strength steel sheet. Therefore, the present inventors disposed the arc-welded portion 13 in the lap welded joint 1 such that the nugget 122 of the spot-welded portion 12 was tempered by the heat input when the arc-welded portion 13 was formed.

The arc-welded portion 13 is formed by arc welding. In arc welding, the amount of heat input is larger than that in spot welding. Therefore, there is a concern that the steel sheet 11 will be deformed around the arc-welded portion 13. In addition, a heat-affected zone is formed over a wide range around the arc-welded portion 13. There is a concern that the heat-affected zone will decrease the strength of the steel sheet 11. Further, the work efficiency of arc welding is lower than that of spot welding. For the above reasons, in the manufacture of the automotive body, spot welding is exclusively used to join the high strength steel sheet 11H. In general, arc welding is used in a limited manner at the location where spot welding is not capable of being used, for example, for the reason that it is not possible to dispose electrodes for spot welding.

However, the present inventors found that the joint strength of the spot-welded portion 12 was dramatically improved by disposing the arc-welded portion 13 such that the nugget 122 of the spot-welded portion 12 was tempered by the heat input when the arc-welded portion 13 was formed. The present inventors conducted a detailed study on the spot-welded portion 12 whose joint strength was improved and found that the nugget 122 was tempered and softened by the heat input during arc welding. The present inventors believed that the embrittlement of the nugget 122 was improved by the softening of the nugget 122 and the joint strength was improved. For the above reasons, the lap welded joint 1 according to this embodiment has the arc-welded portion 13 disposed to temper the nugget 122 of the spot-welded portion 12. Further, in this embodiment, the arc-welded portion 13 is formed in at least one or more of steel sheets 11 among the steel sheets 11 in which the spot-welded portion 12 (that is, the nugget 122) has been formed, in order to reliably transfer the heat input when the arc-welded portion 13 is formed to the nugget 122.

Further, in general, the "welded portion" means a portion that joins two or more materials. However, as shown in FIGS. 1A and 1B, in the lap welded joint 1 according to this embodiment, the arc-welded portion 13 does not necessarily join two or more steel sheets 11. That is, the arc-welded portion 13 may be an arc welding bead that does not join two or more materials to be welded. The main purpose of forming the arc-welded portion 13 is to temper and soften the nugget 122. The arc-welded portion 13 is provided to improve the joint strength of the spot-welded portion 12 without joining two or more steel sheets 11.

Meanwhile, as shown in FIGS. 2A and 2B, the arc welding bead may be formed to connect two or more steel sheets 11, and the arc-welded portion 13 may join the two or more steel sheets 11. That is, two or more of a plurality of steel sheets 11 included in the lap welded joint 1 may be joined by both the spot-welded portion 12 and the arc-welded portion 13. In this case, the arc-welded portion 13 improves the toughness of the nugget 122 to improve the joint strength of the spot-welded portion 12 and improves the j oint strength of the lap welded joint 1.

As described above, in the lap welded joint 1 according to this embodiment, the nugget 122 is tempered by the heat input when the arc-welded portion 13 is formed, and the hardness of the nugget 122 is reduced. The hardness of the nugget 122 is evaluated by the following procedure.

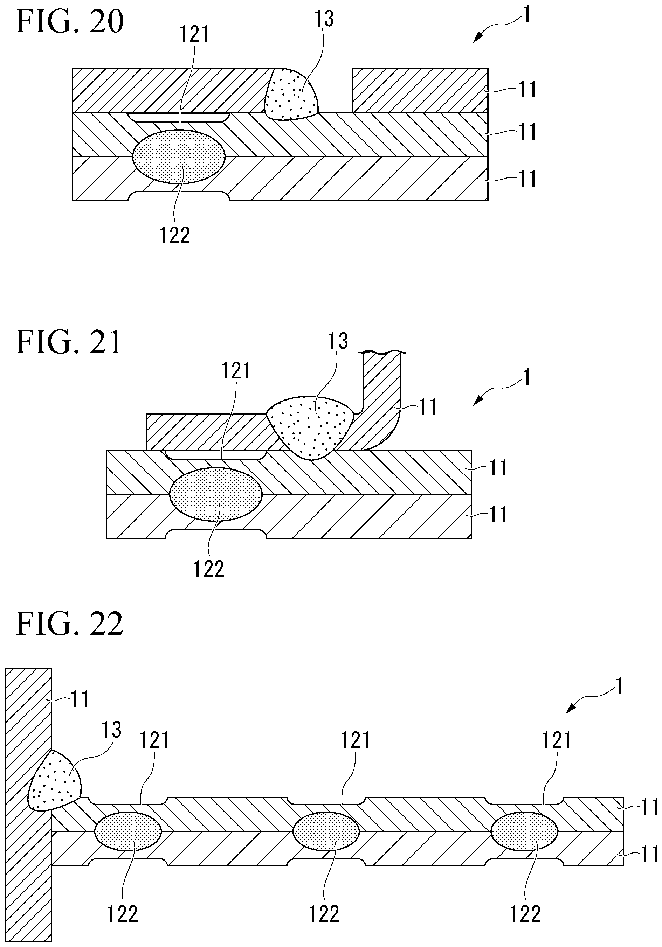

(1) The center C of the indentation 121 of the spot-welded portion 12 is specified. The indentation 121 is a recess that is formed by the pressing of the electrode against the steel sheet 11 during spot welding. In general, the indentation 121 has a substantially circular shape in a plan view of the lap welded joint 1 from the thickness direction. In a case where the shape of the indentation 121 is not a circle, the most recessed portion of the indentation 121 is specified as the center C of the indentation 121. The shape of the indentation 121 and the center thereof can be easily determined by visually recognizing the overlapping portion 111 of the lap welded joint 1 from the thickness direction of the lap welded joint 1. As shown in FIGS. 20 and 21 which will be described below, in a case where another steel sheet 11 or the like is provided to cover the indentation 121, the indentation 121 may be observed after the steel sheet 11 or the like is removed. In addition, in the examples shown in FIGS. 20 and 21, the indentation 121 is visible in a lower surface of the lap welded joint 1. In the spot-welded portion 12, the indentations 121 are formed above and below the nugget 122. In general, the centers C of the indentations 121 are matched with each other in a plan view of the lap welded joint 1 from the thickness direction. Therefore, the indentation 121 may be observed in the lower surface of the lap welded joint 1 to specify the center C of the indentation 121.

(2) The point P closest to the center C of the indentation 121 on the edge of the arc-welded portion 13 is specified. The edge of the arc-welded portion 13 is an outer periphery of a so-called arc welding bead. The edge of the arc-welded portion 13 can be easily determined by visually recognizing the arc-welded portion 13 from the thickness direction of the lap welded joint 1. In a case where another steel sheet 11 or the like is provided to cover the arc-welded portion 13, the arc-welded portion 13 may be observed after another steel sheet 11 or the like is removed.

(3) A straight line connecting the center C of the indentation 121 and the point P closest to the center C of the indentation 121 on the edge of the arc-welded portion 13 is drawn. For example, the one-dot chain line IB-IB in FIG. 1A and the one-dot chain line IIB-IIB in FIG. 2A are the straight lines. The straight line is drawn on the surface of the overlapping portion 111. The straight line may not be necessarily drawn as long as it can be specified.

(4) In the straight line, the overlapping portion 111 of the steel sheet 11 is cut. Therefore, a cross section that includes the straight line and that is perpendicular to the overlapping portion 111 of the steel sheets 11 (in other words, a cross section parallel to the thickness direction of the lap welded joint 1) is formed. For example, the cross-sectional view of FIG. 1B taken along the line IB-IB and the cross-sectional view of FIG. 2B taken along the line IIB-IIB are the cross sections. The cross section may be polished to the extent that hardness can be measured as necessary.

(5) The hardness of a portion, which is included in the high strength steel sheet 11H, in the nugget 122 included in the cross section is measured. Specifically, the Vickers hardness of the nugget 122 at a position that is at a depth of 1/4 of the sheet thickness t of the high strength steel sheet 11H from the spot welding surface 11HS of the high strength steel sheet 11H is continuously measured along the spot welding surface 11HS. Here, the term "continuous measurement" means, for example, measurement at a measurement pitch of 1 mm or less. A broken line L shown in FIGS. 1B and 2B is a hardness measurement position L. It is preferable to measure the hardness of a peripheral portion of the nugget 122 at this time. In addition, the spot welding surface 11HS is one surface, which is joined to the other steel sheet 11 by the nugget 122 of the spot-welded portion 12, of two surfaces of the high strength steel sheet 11H. The direction in which the spot welding surface 11HS extends in the cross section is matched with the direction in which the overlapping portion 111 extends in the cross section. A hardness measurement condition may be a measurement load of 500 gf or 1000 gf. Since almost the same value is obtained under any condition, measurement conditions corresponding to, for example, the shape of a measurement portion can be appropriately adopted.

In addition, two or more spot welding surfaces 11HS of the high strength steel sheet 11H may be present depending on a combination of the steel sheets 11 in the overlapping portion 111. For example, in a case where three steel sheets 11 are spot-welded in the overlapping portion 111 and the high strength steel sheet 11H is located at the center of a sheet set, the number of spot welding surfaces 11HS of the high strength steel sheet 11H is two in the lap welded joint 1. In this case, two or more hardness measurement positions L may be set on the basis of each of two or more spot welding surfaces 11HS, and hardness measurement may be performed at each hardness measurement position L by the above-described procedure. In a case where requirements which will be described below are satisfied at at least one of a plurality of hardness measurement positions L, the lap welded joint is considered to be the lap welded joint 1 according to this embodiment. In addition, it is preferable that the requirements which will be described below are satisfied at all of the plurality of hardness measurement positions L.

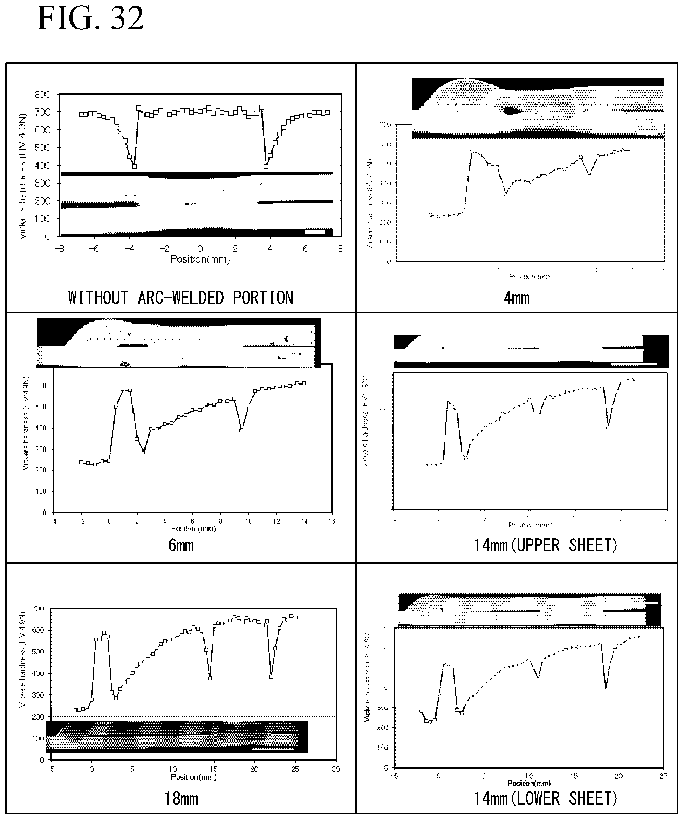

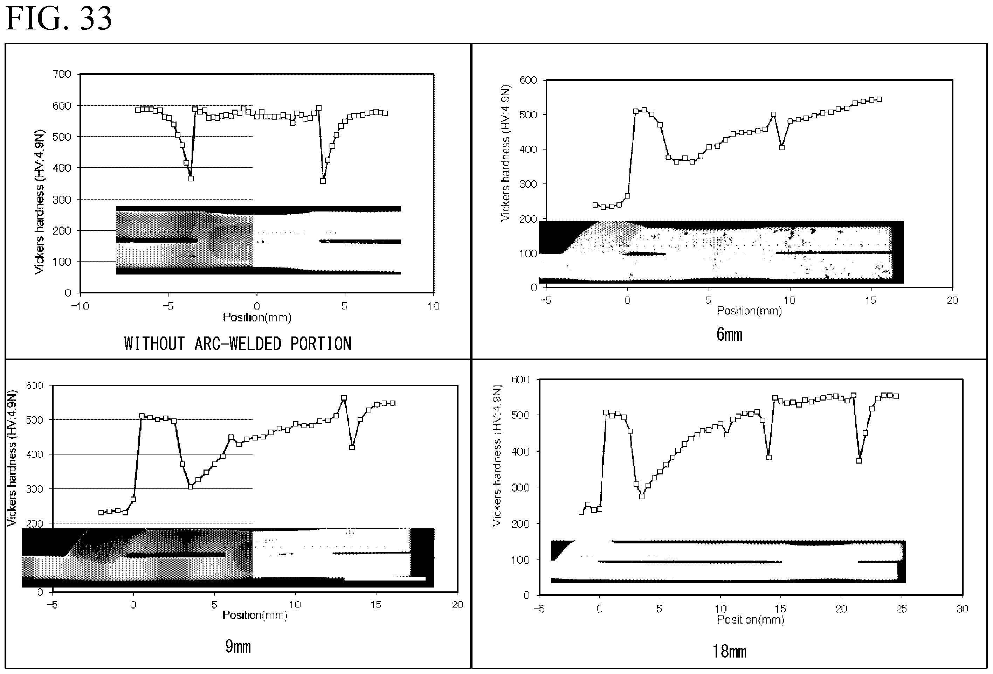

When the hardness of the nugget 122 and the peripheral portion thereof is measured along the procedures (1) to (5), for example, hardness curves shown in FIG. 32, FIG. 33, and the like are obtained. In general, the hardness curve of a normal spot-welded portion 12 in which the arc-welded portion 13 is not disposed is a graph "without arc welding" on the upper left side of FIG. 32. In the hardness curve on the upper left side of FIG. 32, while significantly softened portions are observed in the heat-affected zones at both ends of the nugget 122, the hardness of the inside of the nugget 122 is substantially uniform. On the other hand, the hardness curve of the spot-welded portion 12 according to this embodiment in which the arc-welded portion 13 is disposed is, for example, "4 mm" on the upper right side of FIG. 32 or the like. The hardness of the inside of the nugget 122 is lower as the distance to the arc-welded portion 13 decreases. The reason is that, as the distance to the arc-welded portion 13 decreases, the maximum attainment temperature during arc welding is higher, the tempering temperature is higher, and the degree of softening caused by tempering is larger.

In a case where the nugget 122 is tempered using the arc-welded portion 13, a portion in which the hardness measurement value of the nugget 122 is minimized, that is, the softest nugget portion is formed between the center of the nugget 122 and the arc-welded portion 13 (that is, at a position that is closer to the arc-welded portion 13 than the center of the nugget 122) in the nugget 122. In general, the center of the nugget 122 is matched with the center C of the indentation 121 of the spot-welded portion 12 in the plan view of the lap welded joint 1 from the thickness direction. For example, induction heating is known as a method for tempering the nugget 122. However, in general, during the tempering of the nugget 122, the nugget 122 is uniformly tempered, and the softest nugget portion is not formed. On the other hand, in a case where the nugget 122 is tempered using the arc-welded portion 13, the tempering temperature is higher at a position closer to the arc-welded portion 13. Therefore, in this case, the nugget 122 is unevenly tempered. The fact that the softest nugget portion is formed between the center of the nugget 122 and the arc-welded portion 13 means that the nugget 122 is tempered by welding heat when the arc-welded portion 13 is formed.

In a case where the nugget 122 is tempered by the heat input when the arc-welded portion 13 is formed, the softest nugget portion is often formed at the end of the nugget 122. Meanwhile, in a case where the arc-welded portion 13 is formed such that the distance between the nugget 122 and the arc-welded portion 13 is very short, for example, such that the arc-welded portion 13 and the spot-welded portion 12 are overlapped with each other, the end portion of the nugget 122 may be re-hardened during arc welding, and the softest nugget portion may be formed at a position away from the end of the nugget 122.

The creation of the above-described hardness curve makes it possible to specify the minimum value (the hardness measurement value of the softest nugget portion) and the maximum value of the hardness measurement values of the nugget 122. In the lap welded joint 1 according to this embodiment, a difference $\Delta HV$ between the minimum value and the maximum value of the hardness measurement values of the nugget 122 is equal to or greater than 25 HV. In a case where $\Delta HV$ is less than 25 HV, it is not possible to sufficiently improve the embrittlement of the nugget 122, and the joint strength of the lap welded joint 1 is not sufficiently improved. $\Delta HV$ is preferably as large as possible and may be, for example, equal to or greater than 30 HV, equal to or greater than 35 HV, equal to or greater than 40 HV, or equal to or greater than 50 HV. An upper limit of $\Delta HV$ is not particularly specified, but may be, for example, equal to or less than 270 HV, equal to or less than 220 HV, or equal to or less than 170 HV. In addition, in a case where a portion of the nugget 122 is overlapped with arc welding metal in the cross section, the shape of the nugget 122 before arc welding may be estimated on the basis of the shape of another portion of the nugget 122.

The distance between the spot-welded portion 12 and the arc-welded portion 13 is not particularly limited as long as $\Delta HV$ is equal to or greater than 25 HV. According to the results of the experiments by the present inventors, for example, in a case where the shortest distance between the center C of the indentation 121 of the spot-welded portion 12 and the edge of the arc-welded portion 13 is equal to or less than 17 mm, equal to or less than 15 mm, or equal to or less than 13 mm in the plan view of the lap welded joint 1 from the thickness direction, it is possible to sufficiently temper the nugget 122 and thus to further increase $\Delta HV$. However, when the heat input during arc welding was increased, it was possible to set $\Delta HV$ to 25 HV or more even though the shortest distance between the center C of the indentation 121 of the spot-welded portion 12 and the edge of the arc-welded portion 13 was greater than 17 mm.

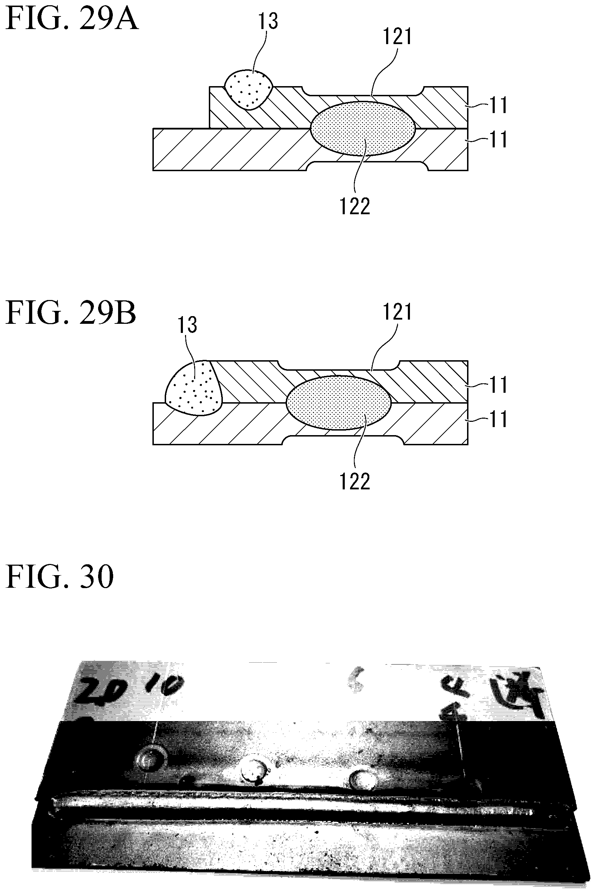

In addition, even when the distance between the spot-welded portion 12 and the arc-welded portion 13 is short, it is possible to set $\Delta HV$ to 25 HV or more. For example, a photograph of FIG. 30 shows an aspect in which the indentation 121 of the spot-welded portion 12 and the arc-welded portion 13 are overlapped with each other on the right side of the lap welded joint 1. However, even in the spot-welded portion 12, it was possible to set $\Delta HV$ to 25 HV or more. The lap welded joint 1 was cut, and a cross section was observed. As a result, the nugget 122 and the arc-welded portion 13 were not overlapped with each other. On the other hand, in a case where a slight gap was provided between the spot-welded portion 12 and the arc-welded portion 13, there was a tendency for $\Delta HV$ to increase. Therefore, for example, the interval between the indentation 121 of the spot-welded portion 12 and the edge of the arc-welded portion 13 may be greater than 0 mm, equal to or greater than 1 mm, equal to or greater than 2 mm, or equal to or greater than 4 mm.

The size of the arc-welded portion 13 is not particularly limited. Meanwhile, according to the results of the experiments by the present inventors, it is preferable that the width of the arc-welded portion 13 is equal to or greater than 3 mm. As the width of the arc-welded portion 13 increases, the amount of heat input during arc welding increases. Therefore, it is possible to sufficiently temper the nugget 122 of the spot-welded portion 12. The width of the arc-welded portion 13 may be equal to or greater than 4 mm, equal to or greater than 5 mm, or equal to or greater than 6 mm. It is not necessary to specify the upper limit of the width of the arc-welded portion 13. However, for example, the width of the arc-welded portion 13 may be equal to or less than 15 mm. In addition, in a case where the arc welding bead is long in one direction, for example, in a case where the arc welding bead extends in a straight line, the "width of the arc-welded portion 13" can be a length in a direction that is perpendicular to the one direction (longitudinal direction) and that is perpendicular to the thickness direction of the lap welded joint 1.

As described above, the number of steel sheets 11 in the lap welded joint 1 according to this embodiment is not limited. In addition, the shape of the steel sheet 11 is not particularly limited. Therefore, the lap welded joint 1 according to this embodiment can have various shapes. Hereinafter, preferred examples will be described. Further, in the examples which will be described below, any of a plurality of steel sheets 11 may be set as the high strength steel sheet 11H. Therefore, in the drawings corresponding to the examples which will be described below, for convenience, all of the steel sheets 11 are denoted by reference numeral "11".

The arc-welded portion 13 shown in FIG. 2B is a lap fillet welded portion that joins a surface of one steel sheet 11 and an end surface of the other steel sheet 11. Meanwhile, as shown in FIG. 3, one of the plurality of steel sheets 11 may have a bent portion, and the arc-welded portion 13 may be a fillet welded portion that joins a surface of one steel sheet 11 and a surface of the bent portion of the other steel sheet 11. As shown in FIG. 4, the end surfaces of two steel sheets 11 which are arranged on substantially the same plane may be joined by the arc-welded portion 13.

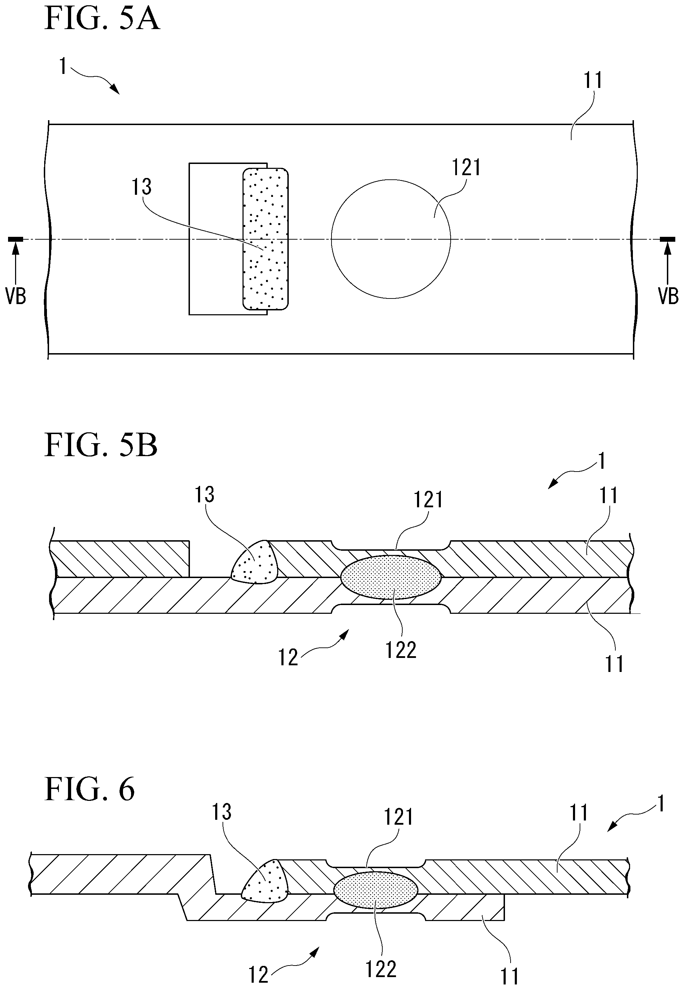

A hole for arc welding may be provided in the steel sheet 11. For example, as shown in a plan view of FIG. 5A and a cross-sectional view of FIG. 5B, a hole may be provided in the steel sheet 11, and a welded portion obtained by performing lap fillet welding on a surface of a steel sheet 11 that is in contact with the steel sheet 11 and an inner end surface of the hole of the steel sheet 11 may be used as the arc-welded portion 13 of the lap welded joint 1 according to this embodiment.

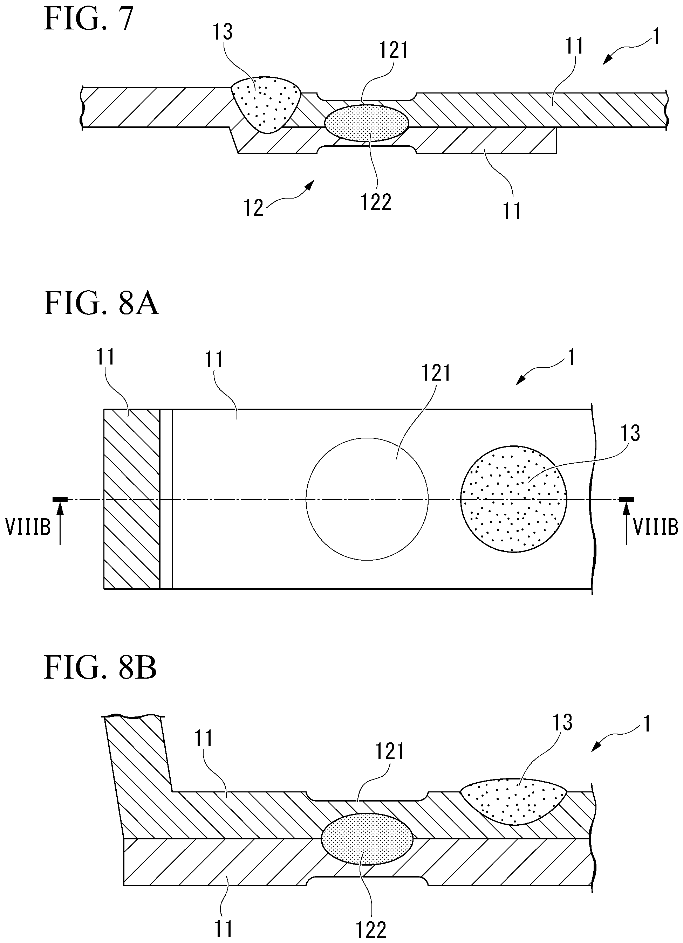

The structure of a joggled lap joint may be applied to the arc-welded portion 13. The joggled lap joint is a welded joint in which a step is provided in one of members of a lap joint and base metal surfaces are substantially in the same plane as described in JIS Z 3001-1:2018. FIGS. 6 and 7 show examples of the cross section of the arc-welded portion 13 to which a joggle structure is applied. In the joggle structure shown in FIG. 6, there is a gap between the arc-welded portion 13 and the step provided in the steel sheet 11. In the joggle structure shown in FIG. 7, there is no gap between the arc-welded portion 13 and the step provided in the steel sheet 11. That is, in the joggle structure shown in FIG. 7, the step of the steel sheet 11 and an end surface of a steel sheet 11 overlapped with the steel sheet 11 are joined to each other. Even in a case where any of the joggle structures shown in FIGS. 6 and 7 is adopted, the effect of straightening the flow of stress can be obtained. Therefore, it is possible to obtain the advantage of improving energy transfer efficiency at the time of collision or improving the static strength or fatigue strength of the joint.

The arc-welded portion 13 may be an arc-spot-welded portion 13. The arc-spot-welded portion 13 is a welded portion obtained by spot welding using arc welding. A plan view of FIG. 8A and a cross-sectional view of FIG. 8B show the arc-spot-welded portion 13. In addition, the arc-spot-welded portion 13 shown in FIGS. 8A and 8B does not join two steel sheets 11, but can exhibit the effect of tempering the spot-welded portion 12 to improve the joint strength. Meanwhile, the arc-spot-welded portion 13 that joins two steel sheets 11 may be formed by providing a hole in one of the steel sheets 11 in advance and performing arc welding to transfer a filler material to the hole.

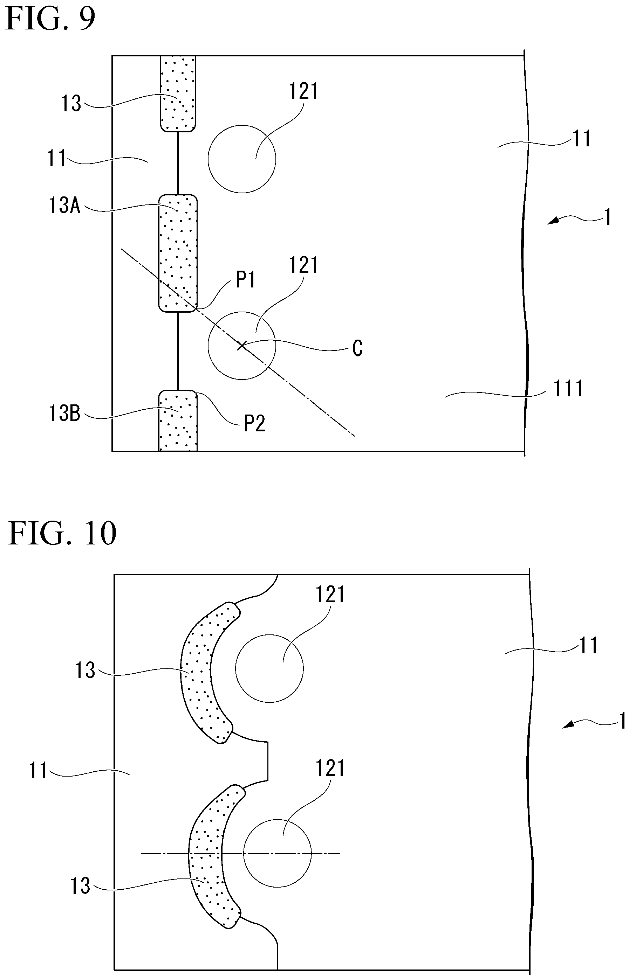

In the above-described example of the lap welded joint 1, the direction in which the spot-welded portion 12 and the arc-welded portion 13 are arranged is perpendicular to the extension direction of the end portion of the steel sheet 11. However, of course, the angle formed between the direction in which the spot-welded portion 12 and the arc-welded portion 13 are arranged and the extension direction of the end portion of the steel sheet 11 is not limited. In addition, the nugget 122 of one spot-welded portion 12 may be tempered by the heat input when two or more arc-welded portions 13 are formed. An example of a combination of these configurations is a lap welded joint 1 in which the arc-welded portion 13 is disposed between a plurality of spot-welded portions 12 as shown in FIG. 9. Even in the disposition shown in FIG. 9, the spot-welded portion 12 is tempered during arc welding, and ΔHV can be set to 25 HV or more.

Further, in a case where the nugget 122 of one spot-welded portion 12 is tempered by the heat input when a plurality of arc-welded portions 13 are formed, a cross section for measuring the hardness of the nugget 122 of the spot-welded portion 12 may be formed along a straight line that connects the center C of the indentation 121 of the spot-welded portion 12 and the point P closest to the center C of the indentation 121 on the edges of the plurality of arc-welded portions 13. For this matter, of two spot-welded portions 12 shown in FIG. 9, a spot-welded portion 12 disposed on the lower side will be described as an example. Two arc-welded portions 13A and 13B are disposed adjacent to each of the upper left and the lower left of the spot-welded portion 12. In the upper arc-welded portion 13A, a point P1 that is closest to the center C of the nugget 122 of the spot-welded portion 12 is located on the lower right side of the arc-welded portion 13A. In the lower arc-welded portion 13B, a point P2 that is closest to the center C of the nugget 122 of the spot-welded portion 12 is located on the upper right side of the arc-welded portion 13B. A distance between C and P1 is shorter than a distance between C and P2. In this case, the overlapping portion 111 may be cut along a straight line connecting C and P 1, and the hardness of the nugget 122 may be measured.

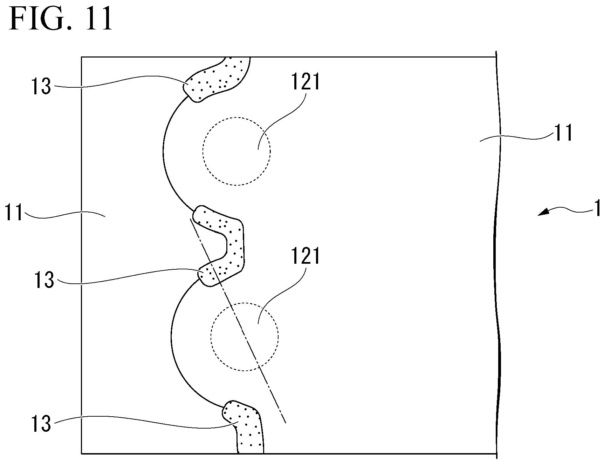

In the above-described example of the lap welded joint 1, the end portion of the steel sheet 11 extends in a straight line. Meanwhile, the shape of the end portion of the steel sheet 11 can be changed in various ways. An example of the shape of the end portion is a wave shape. FIGS. 10 and 11 show examples of the plan views of the lap welded joints 1 in which the end portion of the steel sheet 11 is formed in a wave shape. In any of the lap welded joints 1 shown in FIGS. 10 and 11, the end portion of the steel sheet 11 is formed in a wave shape including a protruding portion and a recessed portion, and the spot-welded portion 12 is disposed inside the protruding portion. In the lap welded joint 1 shown in FIG. 10, the arc-welded portion 13 is provided along an end part of the protruding portion. In the lap welded joint 1 shown in FIG. 11, the arc-welded portion 13 is provided along an end part of the recessed portion. In any configuration, it is possible to reduce the weight of the steel sheet 11. In addition, in any configuration, it is possible to obtain the effect of improving the joint strength.

In the above-described examples of the lap welded joint 1, the number of steel sheets 11 is two. Meanwhile, the number of steel sheets 11 may be three or more. Hereinafter, an example of a lap welded joint 1 having three or more steel sheets 11 will be described.

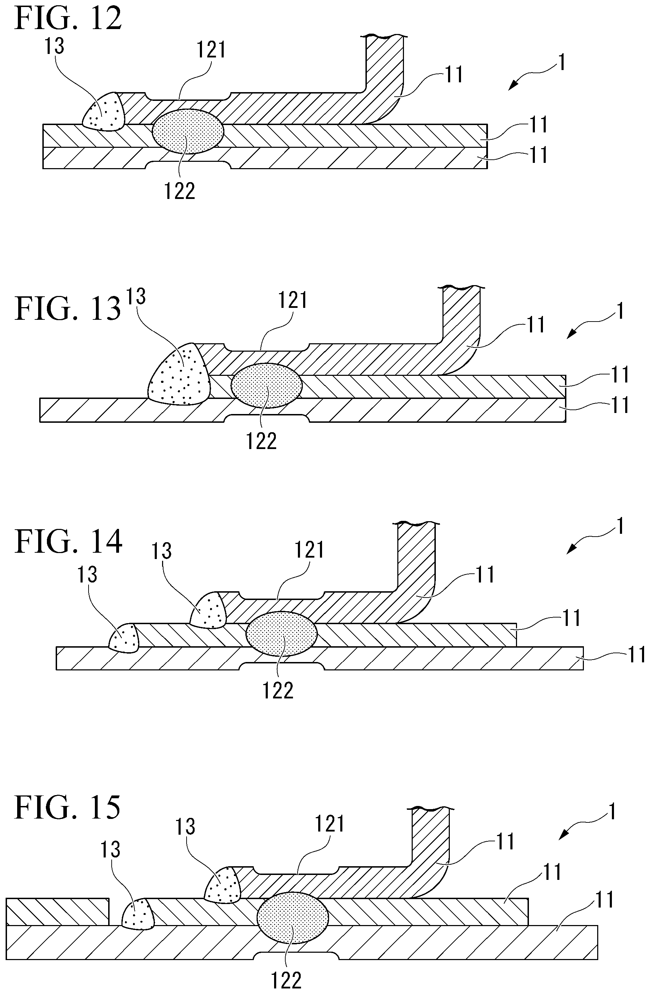

FIG. 12 shows an example in which the overlapping portions 111 of three steel sheets 11 are joined by one spot-welded portion 12 and two steel sheets 11 are joined by one lap fillet arc-welded portion 13. In this example, the steel sheet 11 that has not been joined by the arc-welded portion 13 is firmly joined to an adjacent steel sheet 11 by the spot-welded portion 12 tempered by the arc-welded portion 13.

FIG. 13 shows an example in which the overlapping portions 111 of three steel sheets 11 are joined by one spot-welded portion 12 and the three steel sheets 11 are joined by one lap fillet arc-welded portion 13. In this example, all of the steel sheets 11 are firmly joined by two types of welded portions.

FIG. 14 shows an example in which the overlapping portions 111 of three steel sheets 11 are joined by one spot-welded portion 12 and the three steel sheets 11 are joined by two lap fillet arc-welded portions 13. Specifically, in this example, the steel sheet 11 disposed on one surface of the lap welded joint 1 and the center steel sheet 11 are joined by one of the two arc-welded portions 13, and the steel sheet 11 disposed on the other surface of the lap welded joint 1 and the center steel sheet 11 are joined by the other of the two arc-welded portions 13. In this example, all of the steel sheets 11 are firmly joined by three welded portions. Further, even in this example, a cross section for evaluating the hardness of the nugget 122 is formed on the basis of the arc-welded portion 13 closer to the nugget 122.

FIG. 15 shows an example in which the hole shown in FIG. 5B is applied to one steel sheet 11 in the example shown in FIG. 14. In this example, the hole for arc welding is provided in the center steel sheet 11 among three steel sheets overlapped with each other. In addition, the lap fillet arc-welded portion 13 is disposed in an inner end surface of the hole.

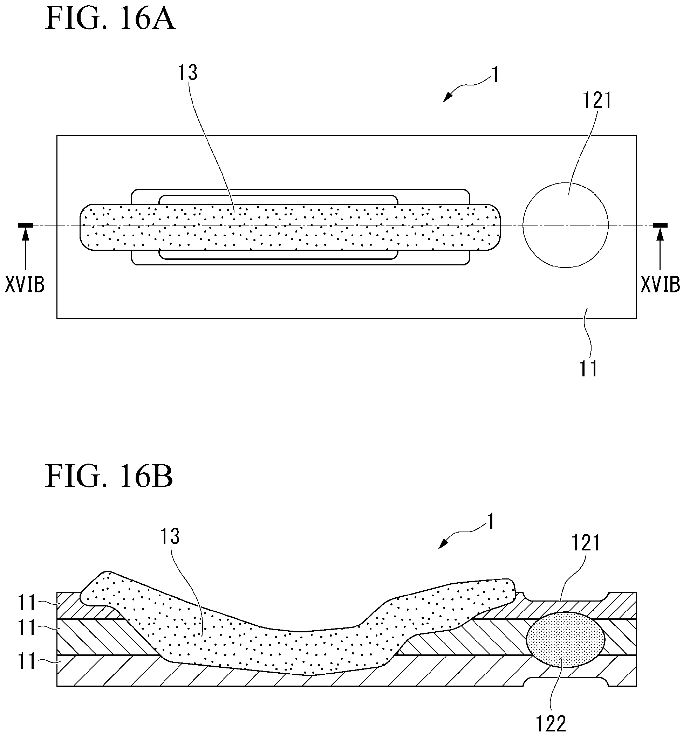

FIGS. 16A and 16B show an example in which the overlapping portions 111 of three steel sheets 11 are joined by one spot-welded portion 12 and holes are used for arc welding on the three steel sheets 11. FIG. 16A is a plan view showing the lap welded joint 1, and FIG. 16B is a cross-sectional view taken along a one-dot chain line of FIG. 16A. In the example shown in FIGS. 16A and 16B, long holes are provided in a steel sheet that faces one surface of the lap welded joint 1 and a center steel sheet among the three steel sheets 11. The long holes are overlapped with each other. No holes are provided in a steel sheet 11 that faces the other surface of the lap welded joint 1 among the three steel sheets 11. In addition, the arc-welded portion 13 is disposed to transfer a filler material to the entire interior of the two long holes overlapped with each other. The spot-welded portion 12 is arranged side by side with the arc-welded portion 13 along the extension direction of the long holes.

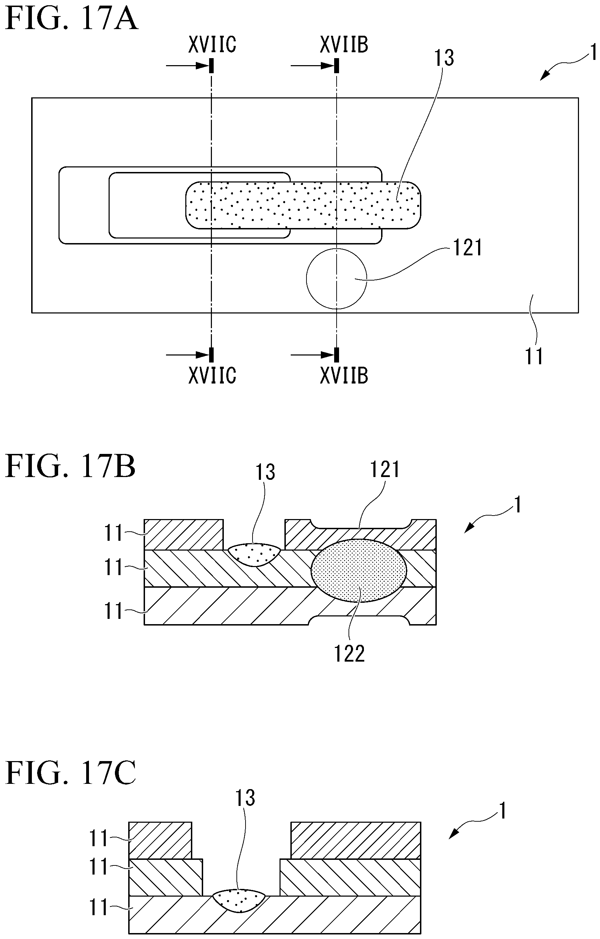

FIGS. 17A, 17B, and 17C show an example in which the overlapping portions 111 of three steel sheets 11 are joined by one spot-welded portion 12 and holes are used for arc welding on the three steel sheets 11. FIG. 17A is a plan view showing the lap welded joint 1, FIG. 17B is a cross-sectional view taken along a one-dot chain line XVIIB-XVIIB of FIG. 17A, and FIG. 17C is a cross-sectional view taken along a one-dot chain line XVIIC-XVIIC. In this example, the spot-welded portion 12 is arranged side by side with the arc-welded portion 13 along a direction perpendicular to the extension direction of the long holes. In addition, in this example, the arc-welded portion 13 is provided only in a portion of the long hole. In this example, the other configurations are the same as those in FIGS. 16A and 16B.

In the examples shown in FIGS. 12 to 17C, all of the plurality of steel sheets 11 included in the lap welded joint 1 are partially overlapped with each other and are joined by the spot-welded portion 12. However, only some of the steel sheets 11 included in the lap welded joint 1 may be joined by the spot-welded portion 12. In this case, the steel sheets 11 that have not been joined by the spot-welded portion 12 and are located outside the spot-welded portion 12 may be joined by the arc-welded portion 13.

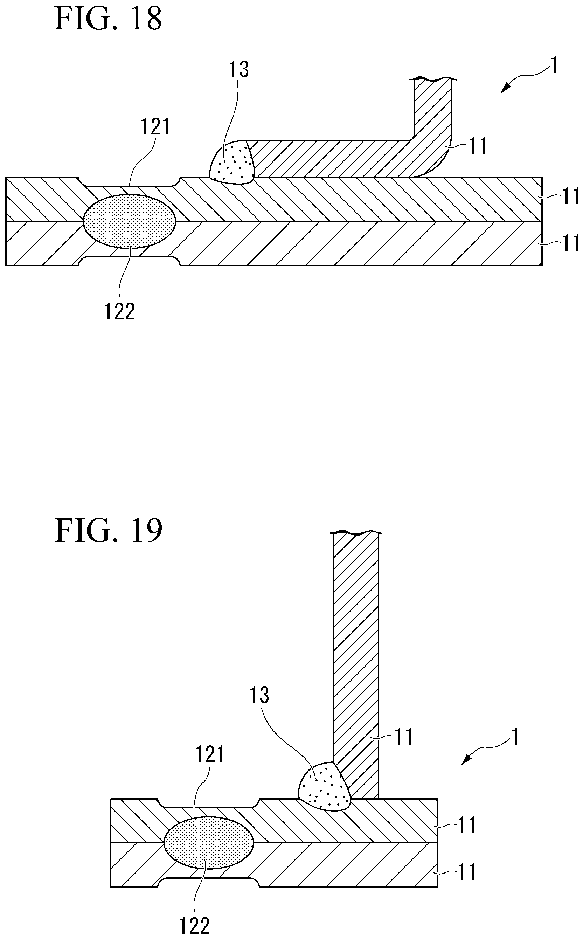

FIG. 18 shows an example in which only two of three steel sheets 11 are spot-welded. The steel sheet 11 that has not been spot-welded and the steel sheet 11 that has been spot-welded are joined by the lap fillet arc-welded portion 13.

FIG. 19 shows an example in which only two of three steel sheets 11 are spot-welded. The steel sheet 11 that has not been spot-welded and the steel sheet 11 that has been spot-welded are joined by a T-shaped fillet arc-welded portion 13. Here, an end surface of the steel sheet 11 that has not been spot-welded is abutted on a surface of the steel sheet 11 that has been spot-welded.

FIG. 20 also shows an example in which only two of three steel sheets 11 are spot-welded. A hole is provided in the steel sheet 11 that has not been spot-welded, and an inner end surface of the hole of the steel sheet 11 that has not been spot-welded and a surface of the steel sheet 11 that has been spot-welded are joined by the lap fillet arc-welded portion 13.

FIG. 21 also shows an example in which only two of three steel sheets 11 are spot-welded. A hole is provided in the steel sheet 11 that has not been spot-welded, and the steel sheet 11 that has not been spot-welded and the steel sheet 11 that has been spot-welded are joined by the arc-spot-welded portion 13 shown in FIGS. 8A and 8B.

In the examples shown in FIGS. 20 and 21, the indentation 121 of the spot-welded portion 12 is covered with the steel sheet 11 that has been arc-welded. However, in the evaluation of the hardness of the nugget 122, the center C of the indentation 121 can be specified by removing the steel sheet 11 that has been arc-welded. In addition, in the examples shown in FIGS. 20 and 21, the indentation 121 is visible in a lower surface of the lap welded joint 1. In the spot-welded portion 12, the indentations 121 are formed above and below the nugget 122, and the centers C of the indentations 121 are usually matched with each other in the plan view of the lap welded joint 1 from the thickness direction. Therefore, the indentation 121 may be observed on the lower surface of the lap welded joint 1, and the center of the indentation 121 may be specified.

FIG. 22 also shows an example in which only two of three steel sheets 11 are spot-welded. The steel sheet 11 that has not been spot-welded and the steel sheet 11 that has been spot-welded are joined by a T-shaped fillet arc-welded portion 13. However, in the example shown in FIG. 22, the end surface of the steel sheet 11 that has been spot-welded is abutted on the surface of the steel sheet 11 that has not been spot-welded unlike the example shown in FIG. 19.

In addition, the example shown in FIG. 22 includes three spot-welded portions 12. Among the three spot-welded portions 12, the right spot-welded portion 12 and the center spot-welded portion 12 are located in the vicinity of the arc-welded portion 13, but are a long distance away from the arc-welded portion 13. In this case, the right spot-welded portion 12 and the center spot-welded portion 12 may not be sufficiently tempered during arc welding and may not satisfy the above-described requirements for the hardness of the nugget. However, even in this case, when the left spot-welded portion 12 satisfies the above-described requirements for the hardness of the nugget, the example shown in FIG. 22 is regarded as the lap welded joint 1 according to this embodiment. In a case where a plurality of spot-welded portions 12 are provided in one lap joint, not all of the spot-welded portions need to satisfy the above-described requirements for the hardness of the nugget. In the lap welded joint 1, when the above-described requirements for the hardness of the nugget are satisfied only at the location where the joint strength is particularly required, it is possible to give sufficient joint strength to the lap welded joint 1.

Various examples of the lap welded joint 1 according to this embodiment have been described above. However, the present invention is not limited to these examples. The above-described examples can also be appropriately combined with each other. In addition, a well-known joint structure that has not been described above can be applied to the lap welded joint 1 according to this embodiment.

Next, an automotive frame member according to a second embodiment of the present invention will be described. The automotive frame member according to this embodiment has the lap welded joint 1 according to the first embodiment. In addition, the lap welded joint 1 according to the first embodiment may be applied to only a part or all of a joint portion of the automotive frame members. The location to which the lap welded joint 1 according to the first embodiment has been applied has a high joint strength. That is, the automotive frame member according to this embodiment has a high joint strength despite including the high strength steel sheet 11H in which the joint strength of the joint portion is likely to be reduced.

Examples of the automotive frame member include a bumper reinforcement, an A-pillar, a B-pillar, a side sill, a roof rail, a floor member connected to a front side member, a front side member, a front side member kick portion, a rear side member, a front suspension tower, a tunnel reinforcement, a dash panel, a torque box, a seat frame, a seat rail, and a battery case frame. When the lap welded joint 1 according to this embodiment is partially or entirely applied to any of these automotive frame members, the automotive frame members can have a high joint strength.

A member obtained by applying the lap welded joint 1 according to this embodiment to a connection portion between each of these automotive frame members and a pillar is also regarded as the automotive frame member according to this embodiment. Examples of the connection portion between the automotive frame member and the pillar include a connection portion between a B-pillar reinforcement and a side sill, a connection portion between a front side member and a side sill of an electric automotive, a connection portion between a B-pillar and a roof rail, a connection portion between a roof cross member and a roof rail, a connection portion between a side sill and an A-pillar, a connection portion between a dash panel and a tunnel, and a root portion of a front side member.

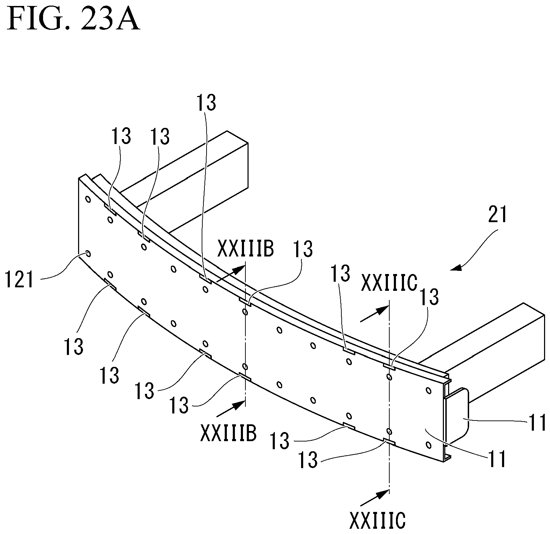

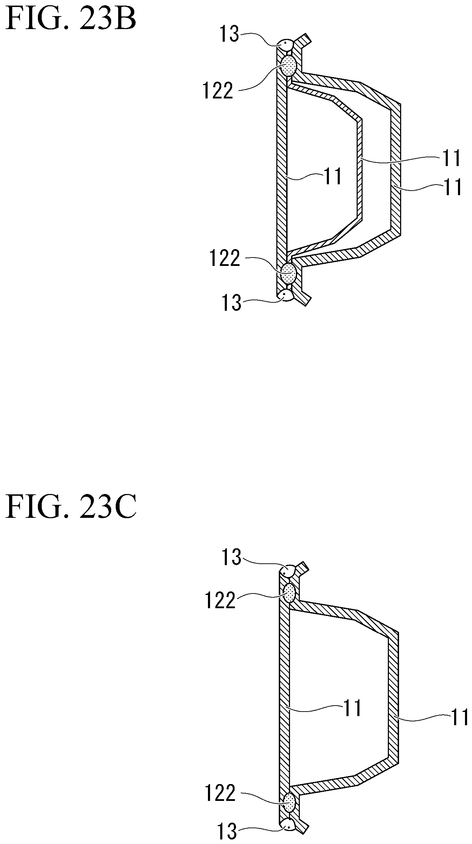

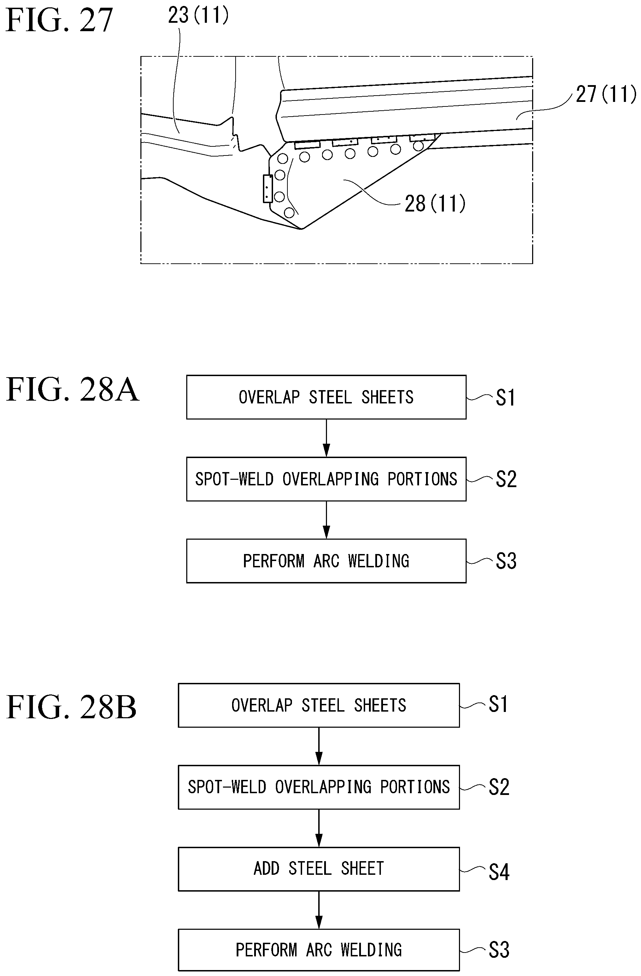

FIG. 23A is a perspective view showing a bumper reinforcement 21. FIG. 23B is a cross-sectional view showing the bumper reinforcement taken along a line XXIIIB-XXIIIB of FIG. 23A, and FIG. 23C is a cross-sectional view showing the bumper reinforcement taken along a line XXIIIC-XXIIIC of FIG. 23A. A cross-sectional structure shown in FIG. 28B, which includes three steel sheets and has a high strength, may be applied to a center portion of the bumper reinforcement 21 which is a portion colliding with an obstacle. On the other hand, a cross-sectional structure shown in FIG. 23C, which includes two steel sheets and is lightweight, may be applied to portions other than the center portion. In any of the cross-sectional structures, one or more flange portions can be bent, and an arc-welded portion can be provided in the bent portion. This makes it possible to further improve the joint strength of the arc-welded portion. Arc welding makes it possible to soften the nugget and to improve the joint strength. Therefore, it is possible to prevent a reduction in energy transfer caused by the fracture of the joint portion of the bumper reinforcement 21 during a frontal collision of the automotive.

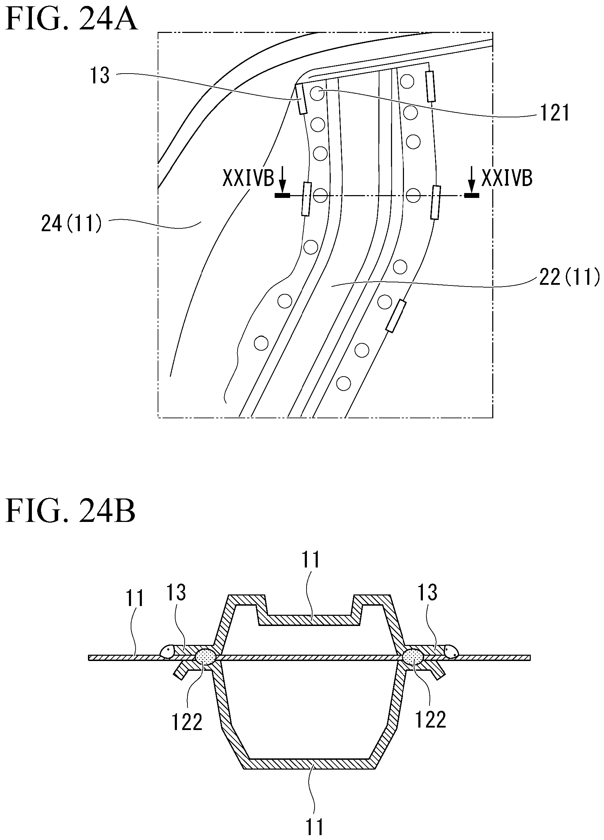

FIG. 24A is a plan view showing a floor member 22 joined to a floor. FIG. 24B is a cross-sectional view of the floor member shown taken along a line XVIXB-XVIXB of FIG. 24A. In FIG. 24B, a front side member 23, which is a lower member, and a floor member 22, which is an upper member, are joined with a floor 24 interposed between. Load is transmitted from the front side member 23 to the floor member 22 during a frontal collision. Arc welding makes it possible to soften the nugget and to improve the joint strength of the joint portion. As a result, it is possible to prevent the fracture of the joint portion even when the load is transmitted from the front side member 23.

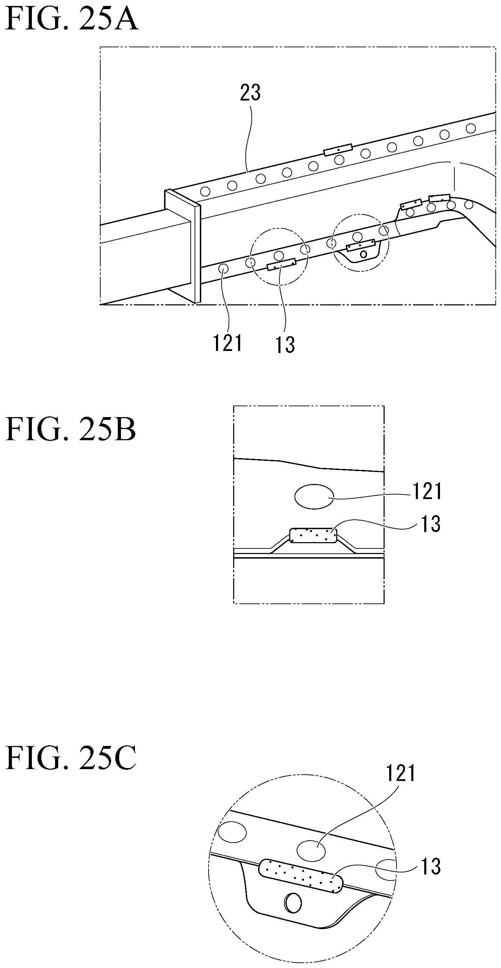

FIG. 25A is a perspective view showing the front side member 23. FIG. 25B is an enlarged view showing a left portion of portions surrounded by two broken lines in FIG. 25A, and FIG. 25C is an enlarged view showing a right portion of the portions surrounded by two broken lines in FIG. 25A. In the joint portion shown in FIG. 25B, the arc-welded portion is formed in a recessed portion of the flange of the upper sheet as shown in FIG. 11. Therefore, the joint portion shown in FIG. 25B is a lap fillet welded portion and has a high joint strength. In addition, in the joint portion shown in FIG. 25B, since the arc-welded portion is accommodated in the recessed portion, it is possible to prevent interference with other members or to prevent problems in the subsequent step after welding.

In the joint portion shown in FIG. 25C, the arc-welded portion is formed in a protruding portion of the flange of the lower sheet. Therefore, the joint portion shown in FIG. 25C is a lap fillet welded portion and has a high joint strength. In addition, the protruding portion of the flange of the lower sheet may have a hole for fastening a bolt or a nut for joining with another member.

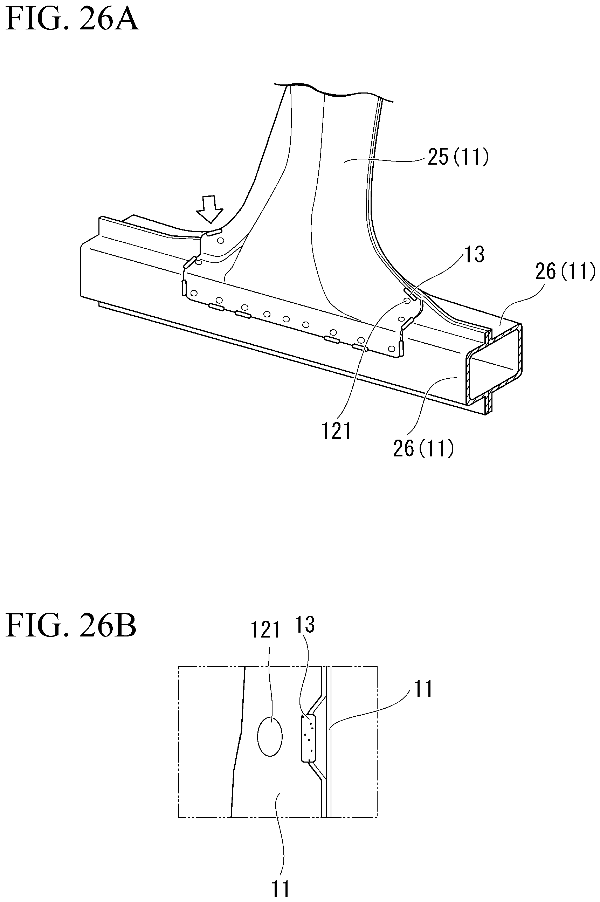

FIG. 26A is a perspective view showing a connection portion between a B-pillar reinforcement 25 and a side sill reinforcement 26. A lateral member shown on the lower side of FIG. 26A is the side sill reinforcement 26, and a vertical member shown on the upper side of FIG. 26A is the B-pillar reinforcement 25. In the joint portion between the two members, spot welding and arc welding are used in combination.

FIG. 26B is an enlarged view showing a portion to which an arrow is attached in FIG. 26A. A connection portion between the B-pillar reinforcement 25 and the side sill reinforcement 26 is a portion that is likely to be fractured during a side collision of the automotive. Fracture can be further prevented by providing the arc-welded portion in this portion. In addition, in the joint portion shown in FIG. 26B, the arc-welded portion is formed in a recessed portion of the flange of the upper sheet as shown in FIG. 11. Therefore, the joint portion shown in FIG. 26B is a lap fillet welded portion and has a high joint strength.

FIG. 27 is a perspective view showing a connection portion between a front side member 23 and a side sill 27 of an electric automotive. A left member is the front side member 23, and a right member is the side sill 27. The front side member 23 and the side sill 27 are connected to each other by a central connection member 28. In the electric automotive, a wide space for disposing a battery is provided on a floor. Therefore, during a frontal collision of the electric automotive, it is necessary to transmit the load applied from the front side member 23 to the side sill 27. Therefore, in this member, it is necessary to increase a shape offset. As the shape offset increases, moment increases. Therefore, a spot-welded portion of the connection portion is likely to be fractured. Therefore, even in the connection portion between the front side member 23 and the side sill 27, it is preferable to use the spot-welded portion and the arc-welded portion in combination.

Next, a method for manufacturing the lap welded joint 1 according to a third embodiment of the present invention will be described. As shown in FIG. 28A, the method for manufacturing the lap welded joint 1 according to this embodiment includes Step S1 of partially or entirely overlapping a plurality of steel sheets 11, Step S2 of spot-welding the overlapping portions 111 of the steel sheets 11 to form the spot-welded portion 12, and Step S3 of arc-welding one or more steel sheets 11 to form the arc-welded portion 13 so as to temper the nugget 122 of the spot-welded portion 12. Here, one or more of the steel sheets 11 to be spot-welded are the high strength steel sheets 11H having a tensile strength of 780 MPa or more. In addition, the nugget of the spot-welded portion 12 is tempered by the welding heat of the arc welding.

Hereinafter, the method for manufacturing the lap welded joint 1 according to the third embodiment will be described. In addition, of course, various preferred examples given in the description of the lap welded joint 1 according to the first embodiment can be applied to the method for manufacturing the lap welded joint 1 according to the third embodiment.

In Step S1 of overlapping the steel sheets 11, the plurality of steel sheets 11 are overlapped with each other. In S1, the entire regions of the steel sheets 11 may be overlapped with each other, or only portions thereof may be overlapped with each other. In addition, in S1, it is not necessary to overlap all of the steel sheets 11 constituting the lap welded joint 1, and only the steel sheets 11 to be spot-welded may overlap each other. At this time, a gap may be formed between the overlapping surfaces. However, from the viewpoint of ensuring spot welding quality, it is desirable that the gap is equal to or less than 2.5 mm, and it is more preferable that the gap is equal to or less than 1.5 mm.

Here, one or more of the steel sheets 11 to be spot-welded are the high strength steel sheets 11H having a tensile strength of 780 MPa or more. A preferable aspect of the high strength steel sheet 11H is based on the aspect given as an example in the description of the first embodiment. In addition, for the number, shape, positional relationship, and the like of the steel sheets 11, the aspect given as an example in the description of the first embodiment can also be appropriately applied. For example, the tensile strength of the high strength steel sheet 11H may be equal to or greater than 1700 MPa.

Then, in Spot Welding Step S2, the overlapping portions 111 of the steel sheets 11 are spot-welded. Therefore, the spot-welded portion 12 joining the overlapping portions 111 of the steel sheets 11 is formed. Spot welding conditions and a spot welding device are not particularly limited, and known conditions and devices can be appropriately adopted. Hereinafter, preferred examples of the spot welding will be described.

A resistance spot welder may be a resistance spot welder of an inverter direct current type or a spot welder of a single-phase alternating current type. A pressurizing mechanism of the resistance spot welder may perform pressurization using a servo motor or may perform pressurization using air. In addition, the shape of a gun may be any of a stationary type, a C type, and an X type.

Electrodes for resistance spot welding are not particularly limited. A preferred example of the electrode is a DR-type electrode having a tip diameter of 5 to 9 mm. The upper and lower electrodes may be the same or different from each other. A material forming the electrode may be any of chromium copper, zirconium copper, or an alumina-dispersed copper electrode. It is preferable that the material forming the electrode is alumina-dispersed copper from the viewpoint of suppressing the deposition of the electrode and the steel sheet, the occurrence of surface flash, cracking caused by liquid metal embrittlement (LME) during welding of zinc-plated steel sheets, and the like.

Welding pressure during resistance spot welding is not particularly limited. The welding pressure may be controlled to a constant value or may be changed according to the stage of welding from the start to the end of the resistance spot welding. It is desirable that the welding pressure is, for example, 200 to 800 kgf.

The energization time of the resistance spot welding is not particularly limited, but may be, for example, 0.15 seconds to 2.0 seconds. It is desirable that the energization time is long from the viewpoint of reducing the risk of the cracking of the welded portion due to hydrogen embrittlement of the spot-welded portion in a case where there is a gap. A current value of the resistance spot welding is not particularly limited, but may be, for example, 5 kA to 13 kA. It is desirable to set the current value to a current value, at which splash does not occur, from the viewpoint of ensuring the joint strength and preventing LME. However, the current value may be within 2.2 kA of the current at which splash occurs. The current value may be controlled to a constant value or may be changed according to the stage of welding from the start to the end of the resistance spot welding. Up-slope energization or down-slope energization may be performed within a range of 1.0 second. The up-slope has an effect of suppressing the occurrence of splash in a case where there is a gap between the steel sheets or an effect of suppressing hydrogen embrittlement cracking of the welded portion due to hydrogen derived from antirust oil. The down-slope has an effect of suppressing the cracking of the welded portion due to LME or the cracking of the welded portion due to hydrogen embrittlement. Therefore, the up-slope energization and the down-slope energization are desirable. In addition, before the main energization for growing the nugget, preliminary energization may be performed once or a plurality of times at a current value less than that in the main energization. This makes it possible to suppress the occurrence of splash or to suppress hydrogen embrittlement cracking derived from the antirust oil. In addition, after the main energization for growing the nugget, post-energization may be performed a plurality of times to modify the metallographic structure of the nugget or to relax solidifying segregation. This makes it possible to obtain the effect of further improving the joint strength and suppressing hydrogen embrittlement. The electrode hold time is not particularly limited, but may be, for example, 0 seconds to 1.0 second. In a case where a galvanized steel sheet is used, it is desirable that the electrode hold time is equal to or longer than 0.15 seconds from the viewpoint of preventing the cracking of the welded portion due to LME. From the viewpoint of suppressing cracking due to hydrogen embrittlement in an ultra-high strength steel sheet, it is desirable that the electrode hold time is equal to or shorter than 0.7 seconds in order to prevent the temperature from dropping too much when the electrode is released and is optimally equal to or shorter than 0.55 seconds.

Then, in Arc Welding Step S3, arc welding is performed such that the nugget 122 of the spot-welded portion 12 is tempered using the welding heat of the arc welding. This arc welding may not necessarily join two or more materials to be welded. The reason is that the arc welding is performed to temper the spot-welded portion 12 with arc heat input. Therefore, the arc welding may be performed on only one steel sheet 11 to form the arc-welded portion 13 (arc welding bead) shown in FIG. 1B. Meanwhile, the arc welding may be performed on two or more steel sheets 11 to form the arc-welded portion 13 shown in FIG. 2B.

The location where arc welding is performed and the arc welding conditions are not particularly limited as long as the spot-welded portion 12 is tempered and the lap welded joint 1 according to the first embodiment is obtained. In general, as the distance between the spot-welded portion 12 and the arc-welded portion 13 decreases, the highest heating temperature of the spot-welded portion 12 during arc welding increases. In addition, as the amount of heat input during arc welding increases, the highest heating temperature of the spot-welded portion 12 during arc welding increases. As the highest heating temperature increases, the amount of temper softening of the spot-welded portion 12 increases. However, when the highest heating temperature is too high, the re-hardening of the spot-welded portion 12 occurs, and the spot-welded portion 12 is hardened. The location where arc welding is performed and the amount of heat input during arc welding may be appropriately selected in consideration of these matters. For example, the location where arc welding is performed and the amount of heat input during arc welding are appropriately selected such that the difference $\Delta HV$ between the minimum value and the maximum value of the hardness measurement values of the nugget 122 measured by the above-described measurement method is equal to or greater than 25 HV.

As a preferred example of the arc welding, the amount of heat input of the arc welding is equal to or greater than 1,000 J/cm, and the arc welding position is determined such that the shortest distance between the center C of the indentation 121 of the spot-welded portion 12 and the edge of the arc-welded portion 13 in the plan view of the lap welded joint 1 from the thickness direction is equal to or less than 17 mm. In addition to the above, the maximum attainment temperature of the softest portion of the nugget 122 may be from 300°C to 720°C. In this case, the softest portion of the nugget 122 can be provided between the center of the nugget 122 of the spot-welded portion 12 and the arc-welded portion 13, and the difference $\Delta HV$ between the minimum value and the maximum value of the hardness measurement values of the nugget 122 can be easily set to 25 HV or more. In addition, the arc welding position may be determined such that the indentation 121 of the spot-welded portion 12 and the arc-welded portion 13 are overlapped with each other. However, it is preferable to determine the arc welding position such that the interval between the edge of the indentation 121 of the spot-welded portion 12 and the edge of the arc-welded portion 13 is greater than 0 mm, from the viewpoint of sufficiently avoiding the re-hardening of the spot-welded portion 12. The amount of heat input may be equal to or greater than 1500 J/cm. In addition, the amount of heat input is energy per unit length of the arc welding bead. The amount of heat input H can be calculated by the following expression using an arc voltage E (V), an arc current I (A), and a welding speed v (cm/min).

$$H = 60EI/v$$

Hereinafter, other preferred examples of the arc welding conditions will be described. The arc welding is, for example, consumable-electrode-type gas shielded arc welding using an iron welding wire or MIG brazing using a Cu alloy wire, but may be other types of arc welding. In a case where the arc welding is MAG welding, for example, Ar + $CO_2$ gas, Ar + $CO_2$ + $O_2$ gas, Ar + $O_2$ gas, and the like may be used as a shielding gas. In a case where the arc welding is carbon dioxide welding, $CO_2$ gas may be used as the shielding gas. Welding wires, such as YGW12 to YGW17, may be used as the arc welding wire. In a case where a high joint strength is required, a high strength wire having a weld metal hardness of about 280 to 480 may be used. In addition, in a case where a blow hole of a GA-plated steel sheet is a problem, a wire corresponding to the galvanized steel sheet may be used. Further, in a case where cracking caused by hydrogen embrittlement occurs around the welded portion, a wire made of austenitic stainless steel, such as SUS309, or a wire made of duplex stainless steel may be used. The cracking caused by hydrogen embrittlement is suppressed by forming an austenite structure having a high diffusible hydrogen absorption capacity in the welded portion. Furthermore, the arc welding may be any one of pulse welding, short arc welding, and CMT welding. The CMT welding is a desirable welding method because the spatter of the welded portion is small. In addition, the arc welding may be synchro-feed welding or super active wire welding. Although these welding methods have different names depending on the manufacturer, they are essentially the same welding method as CMT.

In a case where the arc welding is MIG brazing, for example, Ar gas or gas obtained by including a trace amount of oxidizing gas in Ar can be used as the shielding gas. The wire used for MIG brazing can be, for example, a Cu-Al-based wire, a Cu-Si-based wire, or the like. In a case where it is necessary to further improve the joint strength with the arc-welded portion 13, it is preferable to perform arc welding using the Cu-Al-based wire.

An example of the positional relationship between the arc welding and the spot welding is based on the positional relationship between the arc-welded portion 13 and the spot-welded portion 12 in the lap welded joint 1. That is, the positional relationship between the arc welding and the spot welding may be appropriately set such that various aspects shown in FIG. 1A and the like can be achieved.

In addition, in the method for manufacturing the lap welded joint 1 according to this embodiment, all of the plurality of steel sheets 11 included in the lap welded joint 1 may be partially overlapped and spot-welded. Meanwhile, only some of the steel sheets 11 included in the lap welded joint 1 may be spot-welded. In this case, the steel sheet 11 that has not been spot-welded may be arc-welded to the spot-welded steel sheet 11.

Therefore, as shown in FIG. 28B, the method for manufacturing the lap welded joint 1 according to this embodiment may further include Step S4 of adding one or more steel sheets 11 to two or more spot-welded steel sheets 11 before Arc Welding Step S3. In addition, two or more spot-welded steel sheets 11 and the added steel sheet 11 (that is, the steel sheet 11 that has not been spot-welded) may be joined by Arc Welding Step S3. The arc welding may be lap arc welding for obtaining the lap welded joint 1 shown in FIG. 18 or may be butt arc welding for obtaining a composite structure of the lap joint and the T-joint shown in FIG. 19. Therefore, in Step S4 of adding the steel sheet 11, the steel sheet 11 to be arc-welded may be overlapped with or butted against the steel sheet 11 that has been spot-welded. Step S4 of adding the steel sheet 11 may be provided before Spot Welding Step S2 according to the shape of the member or the structure of a manufacturing line. However, even in this case, Arc Welding Step S3 needs to be performed after Spot Welding Step S2.

In addition, for a sheet set including a galvanized steel sheet (a hot-dip galvannealed steel sheet or a hot-dip galvanized steel sheet), there is a case where zinc in the overlapping surface is vaporized by heat of arc welding and a defect, such as a pit, occurs in the arc-welded portion. In this step, since a small gap is formed between the steel sheets overlapped with each other due to thermal distortion during spot welding, zinc vapor escapes from the gap. Therefore, a defect, such as a pit, is less likely to occur during arc welding. However, in the manufacture of a component having a structure in which the gap is less likely to be formed, a case is also assumed where a defect, such as a pit, is likely to occur. In this case, a press forming step may be performed in advance such that a small gap (0.1 mm to 1.5 mm) is formed between the overlapping surfaces of the steel sheets to provide a minute projection portion on at least one steel sheet in the vicinity of the arc-welded portion.

[Examples]

The effects of one aspect of the present invention will be described in more detail using examples. However, conditions in the examples are only one condition example adopted for confirming the feasibility and effects of the present invention. The present invention is not limited to the one condition example. The present invention can adopt various conditions as long as the object of the present invention is achieved without departing from the gist of the present invention.

(Example 1)

Two identical high strength steel sheets were overlapped and spot-welded. Then, the two high strength steel sheets were arc-welded. Details of the steel sheets and welding conditions are as follows.

- Sheet thickness of high strength steel sheet: 1.6 mm
- Tensile strength of high strength steel sheet: as shown in Table 1
- Welding pressure of spot welding: 400 kgf
- Current of spot welding: 5.6 kA
- Energization time of spot welding: 0.33 seconds
- Hold time of spot welding: 0.17 seconds
- Current of arc welding: 80 A
- Voltage of arc welding: 15.6 V
- Welding speed of arc welding: 30 cm/min
- Arc welding wire: YM-24T
- Shielding gas for arc welding: Ar + 20% $CO_2$
- Positional relationship between spot-welded portion and arc-welded portion: as shown in Table 1. FIG. 29A is a schematic cross-sectional view showing a lap welded joint described as "arc welding on upper sheet", and FIG. 29B is a schematic cross-sectional view showing a lap welded joint described as "arc welding on overlapping surface".

The hardness of the spot-welded portion of the lap welded joint obtained by the above-described procedure was measured by the above-described method, and the difference ΔHV between the minimum value and the maximum value of the hardness measurement values of the nugget was calculated. ΔHV is shown in Table 1.

In addition, a chisel test was performed on the spot-welded portions of various lap welded joints obtained by this procedure. The chisel test was performed on the basis of JIS Z 3144:2013 "Routine test of resistance spot and projection welds", and a fracture type was classified into plug fracture or interfacial fracture. The lap welded joint in which the fracture type was the plug fracture was determined to have a high joint strength. The results of the chisel test are shown in Table 1.

[Table 1]

| Tensile strength of material (MPa) | Distance between center of indentation of spot-welded portion and edge of arc-welded portion (mm) | Fracture type by chisel test | Difference ΔHV between minimum value and maximum value of hardness measurement values of nugget (HV) | Remarks |
|---|---|---|---|---|
| 980 | None | × Interfacial fracture | ≤ 15 | Comparative example |

(continued)

| Tensile strength of material (MPa) | Distance between center of indentation of spot-welded portion and edge of arc-welded portion (mm) | Fracture type by chisel test | Difference ΔHV between minimum value and maximum value of hardness measurement values of nugget (HV) | Remarks |
|---|---|---|---|---|
| 980 | 6 (Arc welding on upper sheet) | ○ Plug fracture | 58 | Present invention |
| 980 | 6 (Arc welding on overlapping surface) | ○ Plug fracture | 67 | Present invention |
| 1300 | None | × Interfacial fracture | ≤ 15 | Comparative example |
| 1300 | 6 (Arc welding on upper sheet) | ○ Plug fracture | 63 | Present invention |
| 1300 | 6 (Arc welding on overlapping surface) | ○ Plug fracture | 73 | Present invention |
| 1470 | None | × Interfacial fracture | ≤ 15 | Comparative example |
| 1470 | 6 (Arc welding on upper sheet) | ○ Plug fracture | 84 | Present invention |
| 1470 | 6 (Arc welding on overlapping surface) | ○ Plug fracture | 78 | Present invention |

In the lap welded joint in which the difference ΔHV between the minimum value and the maximum value of the hardness measurement values of the nugget was equal to or greater than 25 HV, the fracture type caused by the chisel test was the plug fracture. It is presumed that these lap welded joints have a high joint strength. On the other hand, in the lap welded joint in which the difference ΔHV between the minimum value and the maximum value of the hardness measurement values of the nugget was less than 25, the joint strength of the nugget was low, and the interfacial fracture occurred.

(Example 2)

Two identical hot stamping steel sheets were overlapped and spot-welded. Then, the two hot stamping steel sheets were arc-welded. Details of the steel sheets and welding conditions are as follows.

- Sheet thickness of hot stamping steel sheet: 1.6 mm
- Tensile strength of hot stamping steel sheet: 2350 MPa
- Chemical composition of hot stamping steel sheet: 0.45C-0.2Si-0.6Mn-0.008P-0.002S-Cr, Nb, Ti, B
- Welding pressure of spot welding: 400 kgf
- Current of spot welding: 7 kA
- Energization time of spot welding: 0.33 seconds
- Hold time of spot welding: 0.17 seconds
- Current of arc welding: 80 A
- Voltage of arc welding: 15.6 V
- Welding speed of arc welding: 30 cm/min
- Arc welding wire: YM-24T
- Shielding gas for arc welding: Ar + 20% $CO_2$
- Positional relationship between spot-welded portion and arc-welded portion: as shown in Table 2

For reference, an external appearance photograph of a test piece is shown in FIG. 30. A bead that extends in the horizontal direction in a lower portion of the test piece shown in FIG. 30 is the arc welding bead. In addition, a dimple formed adjacent to the bead is the indentation of the spot-welded portion.

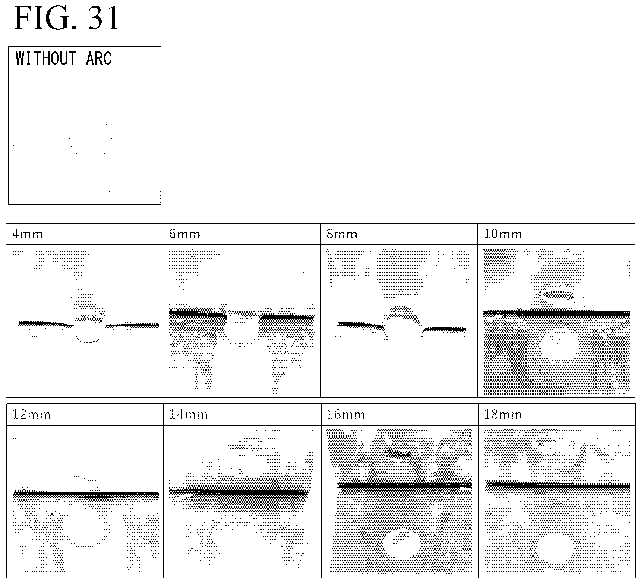

The hardness of the spot-welded portion of the lap welded joint obtained by the above-described procedure was measured by the above-described method. In addition, the above-described chisel test was performed on the spot-welded portion. Evaluation results are shown in Table 2. Further, photographs of the results of the chisel test are shown in FIG. 31.

[Table 2]

| Distance between center of indentation of spot-welded portion and edge of arc-welded portion (mm) | Fracture type by chisel test | Difference ΔHV between minimum value and maximum value of hardness measurement values of nugget (HV) | Remarks |
|---|---|---|---|
| None | × Interfacial fracture | $\leq 15$ | Comparative example |
| 4 | ○ Partial plug fracture | 129 | Present invention |
| 6 | ○ Partial plug fracture | 131 | Present invention |
| 8 | ○ Partial plug fracture | 121 | Present invention |
| 10 | ○ Partial plug fracture | 111 | Present invention |
| 12 | ○ Partial plug fracture | 75 | Present invention |
| 14 | ○ Partial plug fracture | 42 | Present invention |
| 16 | ○ Partial plug fracture | 30 | Present invention |
| 18 | × Interfacial fracture | $\leq 15$ | Comparative example |

In the lap welded joint in which the difference ΔHV between the minimum value and the maximum value of the hardness measurement values of the nugget was equal to or greater than 25 HV, the fracture type caused by the chisel test was the plug fracture. It is presumed that these lap welded joints have a high joint strength. On the other hand, in the lap welded joint in which the difference ΔHV between the minimum value and the maximum value of the hardness measurement values of the nugget was less than 25, the joint strength of the nugget was low, and the interfacial fracture occurred.

For reference, FIG. 32 shows the measurement results of the hardness of a lap welded joint without an arc-welded portion and lap welded joints in which the distances between the edges of the arc-welded portions and the centers of the indentations were 4 mm, 6 mm, 14 mm, and 18 mm.

The nugget of the lap welded joint without an arc-welded portion is a nugget of a normal spot-welded portion. The hardness of the inside of the nugget was uniform, and a softened HAZ was formed outside the nugget.

On the other hand, in the nugget of the lap welded joint in which the arc-welded portion was provided to temper the nugget of the spot-welded portion and the distance between the edge of the arc-welded portion and the center of the indentation was 4 mm, 6 mm, or 14 mm, the hardness decreased as the distance to the arc-welded portion decreased. In these lap welded joints, the hardness of an end portion, which was closer to the arc-welded portion, of both end portions of the nugget was the minimum value of the hardness measurement values of the nugget, and the hardness of the end portion which was farther from the arc-welded portion was the maximum value of the hardness measurement values of the nugget.

The lap welded joint, in which the arc-welded portion was formed and ΔHV was appropriate, had a high joint strength.

Furthermore, in all of the lap welded joints, the hardness of the nugget was measured in a 3/4t portion of the upper sheet. The upper sheet is a steel sheet, which is disposed on the upper side, of two steel sheets included in the cross-sectional photograph. In this example, an arc welding torch was disposed to face the upper sheet. The 3/4t portion of the upper sheet is a position that is at a depth of 3/4 of the thickness of the upper sheet from the surface of the upper sheet that corresponds to the surface of the lap welded joint. Meanwhile, in the lap welded joint in which the distance between the edge of the arc-welded portion and the center of the indentation was 14 mm, the hardness of the nugget was also measured in a 3/4t portion of the lower sheet for reference. The hardness measurement results were the same in any of the measurement portions.

Even when the arc-welded portion was provided in the vicinity of the spot-welded portion, it was not possible to increase the joint strength unless ΔHV was appropriate. In the nugget of the lap welded joint in which the arc-welded portion was provided in the vicinity of the spot-welded portion and the distance between the edge of the arc-welded portion and the center of the indentation was 18 mm, ΔHV was small, and the joint strength was low. It is presumed that this is because the tempering of the spot-welded portion by the arc welding was insufficient. However, it is predicted that, when the heat input during arc welding is increased, the joint strength will be improved even though the distance between the edge of the arc-welded portion and the center of the indentation is 18 mm.

(Example 3)

Two identical hot stamping steel sheets were overlapped and spot-welded. Then, the two hot stamping steel sheets were arc-welded. Details of the steel sheets and welding conditions are as follows.

- Sheet thickness of hot stamping steel sheet: 1.6 mm
- Tensile strength of hot stamping steel sheet: 1780 MPa
- Chemical composition of hot stamping steel sheet: 0.29C-0.2Si-1.8Mn-0.012P-0.003S-Cr, Nb, Cu, Ni, Ti, B
- Welding pressure of spot welding: 400 kgf
- Current of spot welding: 6.7 kA
- Energization time of spot welding: 0.33 seconds
- Hold time of spot welding: 0.17 seconds
- Current of arc welding: 70 A
- Voltage of arc welding: 14.2 V
- Welding speed of arc welding: 40 cm/min
- Arc welding wire: YM-24T, $\varphi$1.2 mm
- Shielding gas for arc welding: Ar + 20% $CO_2$
- Positional relationship between spot-welded portion and arc-welded portion: as shown in Table 3

The hardness of the spot-welded portion of the lap welded joint obtained by the above-described procedure was measured by the above-described method. In addition, the above-described chisel test was performed on the spot-welded portion. Evaluation results are shown in Table 3.

[Table 3]

| Distance between center of indentation of spot-welded portion and edge of arc-welded portion (mm) | Fracture type by chisel test | Difference ΔHV between minimum value and maximum value of hardness measurement values of nugget (HV) | Remarks |
|---|---|---|---|
| None | × Interfacial fracture | ≤ 15 | Comparative example |
| 3 | ○ Partial plug fracture | 75 | Present invention |
| 6 | ○ Partial plug fracture | 80 | Present invention |
| 9 | ○ Partial plug fracture | 67 | Present invention |

(continued)

| Distance between center of indentation of spot-welded portion and edge of arc-welded portion (mm) | Fracture type by chisel test | Difference ΔHV between minimum value and maximum value of hardness measurement values of nugget (HV) | Remarks |
|---|---|---|---|
| 14 | ○ Partial plug fracture | 56 | Present invention |
| 17 | ○ Partial plug fracture | 26 | Present invention |
| 18 | × Interfacial fracture | ≤ 15 | Comparative example |

In the lap welded joint in which the difference ΔHV between the minimum value and the maximum value of the hardness measurement values of the nugget was equal to or greater than 25 HV, the fracture type caused by the chisel test was the plug fracture. It is presumed that these lap welded joints have a high joint strength. On the other hand, in the lap welded joint in which the difference ΔHV between the minimum value and the maximum value of the hardness measurement values of the nugget was less than 25, the joint strength of the nugget was low, and the interfacial fracture occurred.

For reference, FIG. 33 shows the measurement results of the hardness of a lap welded joint without an arc-welded portion and lap welded joints in which the distances between the edges of the arc-welded portions and the centers of the indentations were 6 mm, 9 mm, and 18 mm.

The nugget of the lap welded joint without an arc-welded portion is a nugget of a normal spot-welded portion. The hardness of the inside of the nugget was uniform, and a softened HAZ was formed outside the nugget.

On the other hand, in the nugget of the lap welded joint in which the arc-welded portion was provided to temper the nugget of the spot-welded portion and the distance between the edge of the arc-welded portion and the center of the indentation was 6 mm or 9 mm, the hardness decreased as the distance to the arc-welded portion decreased. In these lap welded joints, the hardness of an end portion, which was closer to the arc-welded portion, of both end portions of the nugget was the minimum value of the hardness measurement values of the nugget, and the hardness of the end portion which was farther from the arc-welded portion was the maximum value of the hardness measurement values of the nugget. The lap welded j oint, in which the arc-welded portion was formed and ΔHV was appropriate, had a high joint strength.

However, even when the arc-welded portion was provided in the vicinity of the spot-welded portion, it was not possible to increase the joint strength unless ΔHV was appropriate. In the nugget of the lap welded joint in which the arc-welded portion was provided in the vicinity of the spot-welded portion and the distance between the edge of the arc-welded portion and the center of the indentation was 18 mm, ΔHV was small, and the joint strength was low. It is presumed that this is because the tempering of the spot-welded portion by the arc welding was insufficient. However, it is predicted that, when the heat input during arc welding is increased, the joint strength will be improved even though the distance between the edge of the arc-welded portion and the center of the indentation is 18 mm.

(Example 4)

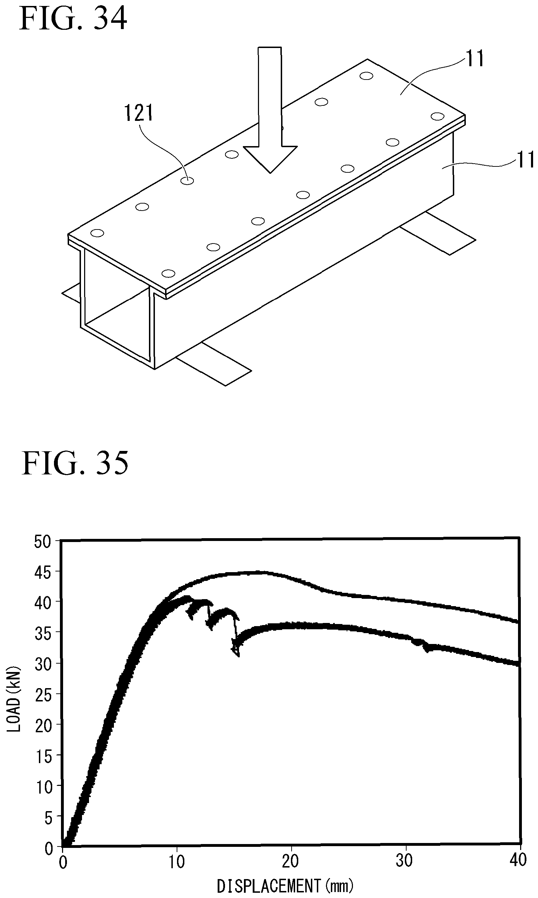

A hat member shown in FIG. 34 was manufactured using two identical hot stamping steel sheets. A flange portion of the hat member was spot-welded. Then, in the invention example, the arc-welded portion was formed to temper the nugget of the spot-welded portion. Details of the steel sheets and welding conditions are as follows.

- Sheet thickness of hot stamping steel sheet: 1.6 mm
- Tensile strength of hot stamping steel sheet: 2000 MPa
- Chemical composition of hot stamping steel sheet: 0.34C-0.2Si-1.3Mn-0.008P-0.001S-Cr, Nb, Ti, B
- Welding pressure of spot welding: 400 kgf
- Current of spot welding: 7.3 kA
- Energization time of spot welding: 0.33 seconds
- Hold time of spot welding: 0.17 seconds
- Spot welding pitch: 50 mm
- Current of arc welding: 80 A
- Voltage of arc welding: 15.6 V

- Welding speed of arc welding: 30 cm/min
- Arc welding wire: YM-24T
- Shielding gas for arc welding: Ar + 20% $CO_2$

In the hat member according to the invention example, arc welding was performed such that the distance between the center of the indentation of the spot-welded portion and the edge of the arc-welded portion was 5 mm. The length of arc welding metal was 30 mm, and arc welding was performed at eight locations. In contrast, in a hat member according to a comparative example, only spot welding was performed. In addition, these hat members were heated to 170°C and held for 20 minutes. This corresponds to a thermal history during electrodeposition coating baking performed on the automotive frame member. Further, a three-point bending test was performed on these hat members. A location indicated by a downward arrow in FIG. 34 is a position where a bending load is applied. Furthermore, when the bending load was applied, both ends of the hat member were supported by a support member.

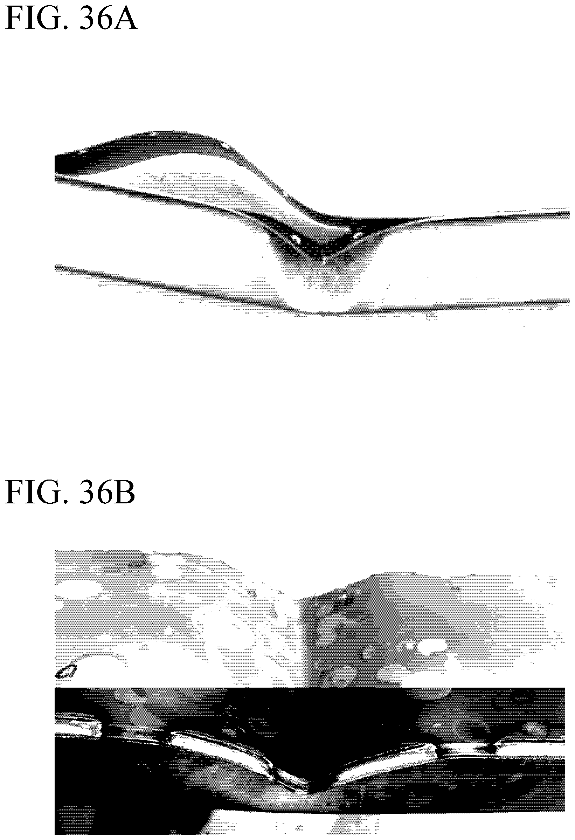

FIG. 35 shows displacement-load curves which are results of the bending test. A lower curve is the result of the test according to the comparative example in which only spot welding was performed. In this comparative example, as shown in a photograph of FIG. 36A, the spot-welded portion was fractured during the bending test. In the curve, the spot-welded portion was fractured at the location where the load was rapidly reduced. On the other hand, an upper curve is the result of the test according to the invention example in which the arc-welded portion was formed to temper the spot-welded portion. In this invention example, as shown in a photograph of FIG. 36B, the spot-welded portion was not fractured, and high member performance was obtained.

Brief Description of the Reference Symbols

1 Lap welded joint
11 Steel sheet
11H High strength steel sheet
11HS Spot welding surface of high strength steel sheet
111 Overlapping portion
12 Spot-welded portion
121 Indentation
122 Nugget
13 Arc-welded portion
21 Bumper reinforcement
22 Floor member
23 Front side member
24 Floor
25 B-pillar reinforcement
26 Side sill reinforcement
27 Side sill
28 Connection member
C Center of indentation
P Point closest to center of indentation on edge of arc-welded portion
L Hardness measurement position
t Sheet thickness of high strength steel sheet

**Claims**

1.  A lap welded joint comprising:

    a plurality of steel sheets that are partially or entirely overlapped;
    a spot-welded portion that joins two or more of the steel sheets; and
    an arc welding bead that is formed in one or more of the steel sheets,
    wherein the spot-welded portion is disposed in an overlapping portion, which is a portion in which the plurality of steel sheets are overlapped, in the lap welded joint,
    the arc welding bead is formed in one or more of the steel sheets in which the spot-welded portion is formed,
    one or more of the steel sheets joined by the spot-welded portion are high strength steel sheets having a tensile strength of 780 MPa or more,
in a cross section that includes a straight line connecting a center of an indentation of the spot-welded portion and a point closest to the center of the indentation on an edge of the arc welding bead in a plan view of the lap welded joint from a thickness direction and that is perpendicular to the overlapping portion of the steel sheets, when Vickers hardness at a position that is at a depth of 1/4 of a sheet thickness of the high strength steel sheet from a spot welding surface of the high strength steel sheet is continuously measured along the spot welding surface, a portion in which a hardness measurement value of a nugget of the spot-welded portion is minimized is present between a center of the nugget and the arc welding bead, and
a difference between a minimum value of the hardness measurement value of the nugget and a maximum value of the hardness measurement value of the nugget is equal to or greater than 25 HV.

2. The lap welded joint according to claim 1,
wherein, in the cross section, the difference between the minimum value of the hardness measurement value of the nugget and the maximum value of the hardness measurement value of the nugget is equal to or greater than 40 HV.

3. The lap welded joint according to claim 1,
wherein two or more of the steel sheets are joined by both the spot-welded portion and the arc welding bead.

4. The lap welded joint according to claim 1,
wherein, in the plan view of the lap welded joint from the thickness direction, a shortest distance between the center of the indentation of the spot-welded portion and the edge of the arc welding bead is equal to or less than 17 mm.

5. The lap welded joint according to claim 1,
wherein, in the plan view of the lap welded joint from the thickness direction, an interval between an edge of the indentation of the spot-welded portion and the edge of the arc welding bead is greater than 0 mm.

6. The lap welded joint according to claim 1,
wherein a width of the arc welding bead is equal to or greater than 3 mm.

7. The lap welded joint according to claim 1,

wherein a number of the steel sheets is three or more,
one or more of the steel sheets are disposed outside the spot-welded portion, and
the steel sheet disposed outside the spot-welded portion and the steel sheet joined by the spot-welded portion are joined by the arc welding bead.

8. The lap welded joint according to claim 1,
wherein a tensile strength of the high strength steel sheet is equal to or greater than 1700 MPa.

9. An automotive frame member comprising the lap welded joint according to any one of claims 1 to 8.

10. A lap welded joint manufacturing method for manufacturing the lap welded j oint according to any one of claims 1 to 8, the lap welded j oint manufacturing method comprising:

partially or entirely overlapping a plurality of steel sheets;
spot-welding overlapping portions of the steel sheets to form a spot-welded portion; and
arc-welding one or more of the steel sheets to form an arc welding bead,
wherein one or more of the steel sheets to be spot-welded are high strength steel sheets having a tensile strength of 780 MPa or more, and
a nugget of the spot-welded portion is tempered by welding heat of the arc welding.

11. The lap welded joint manufacturing method according to claim 10,
wherein, in a plan view of the lap welded joint from a thickness direction, an interval between an edge of an indentation of the spot-welded portion and an edge of the arc welding bead is greater than 0 mm.

12. The lap welded joint manufacturing method according to claim 10,

wherein an amount of heat input of the arc welding is equal to or greater than 1000 J/cm, and

in a plan view of the lap welded joint from a thickness direction, a shortest distance between a center of an indentation of the spot-welded portion and an edge of the arc welding bead is equal to or less than 17 mm.

13. The lap welded joint manufacturing method according to claim 10, further comprising:

adding one or more steel sheets to two or more of the spot-welded steel sheets before the arc welding, wherein the two or more spot-welded steel sheets and the added steel sheet are joined by the arc welding.

14. The lap welded joint manufacturing method according to claim 10, wherein a tensile strength of the high strength steel sheet is equal to or greater than 1700 MPa.

# FIG. 1A

# FIG. 1B

FIG. 2A

FIG. 2B

# FIG. 3

# FIG. 4

FIG. 5A

FIG. 5B

FIG. 6

FIG. 7

FIG. 8A

FIG. 8B

FIG. 9

FIG. 10

FIG. 11

FIG. 12

FIG. 13

FIG. 14

FIG. 15

FIG. 16A

FIG. 16B

## FIG. 17A

XVIIC    XVIIB    13    1

121

11

XVIIC    XVIIB

## FIG. 17B

13    121    1

11

11

11

122

## FIG. 17C

13    1

11

11

11

FIG. 18

FIG. 19

FIG. 20

FIG. 21

FIG. 22

FIG. 23A

FIG. 23B

13

122

11

11

11

122

13

FIG. 23C

13

122

11

11

122

13

FIG. 24A

13

121

XXIVB ↓ ↓ XXIVB

24 (11)

22 (11)

FIG. 24B

11

11    13    13

122    122

11

# FIG. 25A

# FIG. 25B

# FIG. 25C

EP 4 480 624 A1

## FIG. 26A

## FIG. 26B

41

FIG. 27

23(11)

27(11)

28(11)

FIG. 28A

| OVERLAP STEEL SHEETS | S1 |
| SPOT-WELD OVERLAPPING PORTIONS | S2 |
| PERFORM ARC WELDING | S3 |

FIG. 28B

| OVERLAP STEEL SHEETS | S1 |
| SPOT-WELD OVERLAPPING PORTIONS | S2 |
| ADD STEEL SHEET | S4 |
| PERFORM ARC WELDING | S3 |

## FIG. 29A

## FIG. 29B

## FIG. 30

# FIG. 31

# FIG. 32

WITHOUT ARC-WELDED PORTION

4mm

6mm

14mm (UPPER SHEET)

18mm

14mm (LOWER SHEET)

# FIG. 33

WITHOUT ARC-WELDED PORTION

6mm

9mm

18mm

EP 4 480 624 A1

## FIG. 34

## FIG. 35

FIG. 36A

FIG. 36B

## INTERNATIONAL SEARCH REPORT

| International application No. |
| --- |
| **PCT/JP2022/044178** |

**A. CLASSIFICATION OF SUBJECT MATTER**

*B23K 11/36*(2006.01)i; *B23K 9/02*(2006.01)i; *B23K 9/04*(2006.01)i; *B23K 11/00*(2006.01)i; *B23K 11/11*(2006.01)i; *B23K 28/02*(2014.01)i
FI: B23K11/36 330; B23K9/02 S; B23K9/04 H; B23K11/00 570; B23K11/11 540; B23K28/02

According to International Patent Classification (IPC) or to both national classification and IPC

**B. FIELDS SEARCHED**

Minimum documentation searched (classification system followed by classification symbols)

B23K11/36; B23K9/02; B23K9/04; B23K11/00; B23K11/11; B23K28/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2017/047665 A1 (NIPPON STEEL & SUMITOMO METAL CORP) 23 March 2017 (2017-03-23)<br>paragraph [0106]-[0107], fig. 7-10 | 1-14 |
| A | WO 2017/047752 A1 (NIPPON STEEL & SUMITOMO METAL CORP) 23 March 2017 (2017-03-23)<br>claims 1-8, fig. 1-15 | 1-14 |
| A | DE 102018219844 B3 (AUDI AG) 26 March 2020 (2020-03-26)<br>claims 1-7, fig. 1-2 | 1-14 |
| A | JP 2006-43768 A (NIPPON STEEL CORP) 16 February 2006 (2006-02-16)<br>claims 1-8, fig. 1-12 | 1-14 |
| A | JP 2009-241116 A (TOKYU CAR CORP) 22 October 2009 (2009-10-22)<br>claims 1-5, fig. 1-5 | 1-14 |
| A | JP 2015-33706 A (KOBE STEEL LTD) 19 February 2015 (2015-02-19)<br>claim 1, fig. 1-6 | 1-14 |

☑ Further documents are listed in the continuation of Box C.  ☑ See patent family annex.

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br><br>**31 January 2023** | Date of mailing of the international search report<br><br>**14 February 2023** |
| --- | --- |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

## INTERNATIONAL SEARCH REPORT

International application No.

**PCT/JP2022/044178**

| C. | DOCUMENTS CONSIDERED TO BE RELEVANT | |
|---|---|---|
| Category* | Citation of document, with indication, where appropriate, of the relevant passages | Relevant to claim No. |
| A | JP 2019-906 A (TOYOTA MOTOR CORP) 10 January 2019 (2019-01-10) claims 1-3, fig. 1-13 | 1-14 |

Form PCT/ISA/210 (second sheet) (January 2015)

<table>
<tr><th colspan="2">INTERNATIONAL SEARCH REPORT<br>Information on patent family members</th><th colspan="2">International application No.<br><br>**PCT/JP2022/044178**</th></tr>
<tr><th>Patent document<br>cited in search report</th><th>Publication date<br>(day/month/year)</th><th>Patent family member(s)</th><th>Publication date<br>(day/month/year)</th></tr>
<tr><td>WO 2017/047665 A1</td><td>23 March 2017</td><td>US 2018/0257160 A1<br>paragraphs [0140]-[0141], fig.<br>7-10<br>EP 3351333 A1<br>KR 10-2018-0031048 A<br>CN 108136528 A</td><td></td></tr>
<tr><td>WO 2017/047752 A1</td><td>23 March 2017</td><td>US 2018/0236589 A1<br>claims 1-15, fig. 1-15<br>EP 3351340 A1<br>KR 10-2018-0031040 A<br>CN 108290247 A</td><td></td></tr>
<tr><td>DE 102018219844 B3</td><td>26 March 2020</td><td>(Family: none)</td><td></td></tr>
<tr><td>JP 2006-43768 A</td><td>16 February 2006</td><td>(Family: none)</td><td></td></tr>
<tr><td>JP 2009-241116 A</td><td>22 October 2009</td><td>(Family: none)</td><td></td></tr>
<tr><td>JP 2015-33706 A</td><td>19 February 2015</td><td>(Family: none)</td><td></td></tr>
<tr><td>JP 2019-906 A</td><td>10 January 2019</td><td>US 2018/0361508 A1<br>claims 1-3, fig. 1-13<br>CN 109128464 A</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022023284 A
- JP 2010012504 A
- JP 6769584 B
- WO 2014024997 A
- JP 2020069525 A
- JP 2016055337 A
- JP 2010172945 A
- JP 2005152989 A